(19) Europäisches Patentamt
European Patent Office
Office européen des brevets

(11) EP 3 015 483 A1

(12) EUROPÄISCHE PATENTANMELDUNG

(43) Veröffentlichungstag:
**04.05.2016 Patentblatt 2016/18**

(21) Anmeldenummer: **14191162.8**

(22) Anmeldetag: **30.10.2014**

(51) Int Cl.:
***C08F 246/00*** (2006.01) ***C08F 218/08*** (2006.01)
***C08F 210/02*** (2006.01) ***C08F 2/00*** (2006.01)
***C08K 5/00*** (2006.01) ***C08L 23/08*** (2006.01)
***C08L 31/04*** (2006.01) *C08F 220/32* (2006.01)
*C08F 2/06* (2006.01) *C08K 5/092* (2006.01)
*C08K 5/19* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**50569 Köln (DE)**

(72) Erfinder:
- **Kalkofen, Rainer**
  **51379 Leverkusen (DE)**
- **Frenzel, Ulrich**
  **41542 Dormagen (DE)**
- **Taschner, Frank**
  **40789 Monheim (DE)**
- **Arnoldi, Eric**
  **51375 Leverkusen (DE)**
- **Lieber, Susanne**
  **67663 Kaiserslautern (DE)**
- **Roos, Andreas**
  **40547 Düsseldorf (DE)**

# (54) Epoxygruppenhaltige Ethylen-Vinylacetat-Copolymere

(57) Die Erfindung betrifft epoxygruppenhaltige Ethylen-Vinylacetat-Copolymere mit einem Gehalt an einpolymerisiertem Vinylacetat von mindestens 35 Gew.-% einem Gehalt an einpolymerisiertem Ethylen von mindestens 10 Gew.-%, sowie einem Gehalt an einpolymerisierten epoxygruppenhaltigen Monomeren von 0,5 bis 6,2 Gew.-%, ein Verfahren zu deren Herstellung sowie deren Verwendung und daraus hergestellte vulkanisierbare Zusammensetzungen, ein Verfahren zu deren Vulkanisation, die dadurch erhältlichen Vulkanisate und deren Verwendung.

EP 3 015 483 A1

**Beschreibung**

Die Erfindung betrifft epoxygruppenhaltige Ethylen-Vinylacetat-Copolymere mit einem Gehalt an einpolymerisiertem Vinylacetat von mindestens 35 Gew.-%, einem Gehalt an einpolymerisiertem Ethylen von mindestens 10 Gew.-%, sowie einem Gehalt an einpolymerisierten epoxygruppenhaltigen Monomeren von 0,1 bis 6,2 Gew.-%, ein Verfahren zu deren Herstellung sowie deren Verwendung und daraus hergestellte vulkanisierbare Zusammensetzungen.

Unter "Copolymeren" im Sinne der Erfindung werden alle Copolymerisate verstanden, die copolymerisierte Einheiten von mindestens drei verschiedenen Monomeren enthalten.

Ethylen-Vinylacetat-Copolymerisate (EVM) mit einem Vinylacetat (VA)-Gehalt von mindestens 35 Gew.-% sind großtechnisch hergestellte Kautschuke, aus denen durch radikalische Vernetzung Vulkanisate hergestellt werden können, die sich insbesondere durch gute Öl- und Medienbeständigkeit, exzellente Alterungsbeständigkeit sowie hohe Flammwidrigkeit auszeichnen. Zur radikalischen Vernetzung werden dabei vor allem handelsübliche Peroxidinitiatoren eingesetzt, doch ist auch eine Vernetzung unter Einsatz energiereicher Strahlen möglich und üblich.

Ein bekanntes Problem von derart vulkanisierten EVM-Kautschuken ist ihre unzureichende Leistungsfähigkeit in Anwendungen mit wiederholter und dynamischer Belastung. Für viele Anwendungen sind z.B. Ermüdungsbeständigkeit und Weiterreißbeständigkeit von Gummiteilen aus EVM-Kautschuken unzureichend.

Ein weiteres bekanntes Problem ist, daß die Gummiteile aus EVM-Kautschuk im warmen Zustand nach der Vulkanisation eine sehr niedrige Einreiß- und Weiterreißbeständigkeit aufweisen, wodurch es bei der Entnahme aus der Form leicht zur Beschädigung und/oder Zerstörung des hergestellten Gummiteils kommen kann. Als Ausweg wurde in der Literatur eine Verwendung zweier Peroxide in Kombination vorgeschlagen, wobei die Gummiteile in untervernetztem Zustand entformt werden und danach mit Hilfe des zweiten, bei einer höheren Temperatur wirksamen, Peroxids ausvernetzt werden (siehe: Bergmann, G.; Kelbch, S.; Fischer, C.; Magg, .H; Wrana, C., Gummi, Fasern, Kunststoffe Volume 61 Issue 8 Pages 490-497, 2008. Nachteilig ist allerdings der hohe personelle, materielle und zeitliche Aufwand, zumal dabei während beider Vernetzungsschritte sauerstofffrei gearbeitet werden muss, um ein Klebrigwerden der Gummioberflächen während der Vulkanisation zu verhindern). Dieses Auftreten klebriger Gummioberflächen nach peroxidischer Vulkanisation unter Luft-, d.h. Sauerstoffkontakt, ist ein weiteres allgemeines Problem, das ebenfalls die Verarbeitung von EVM Kautschuken erschwert und deren Verwendbarkeit einschränkt. Zudem kann es durch leichtflüchtige Zersetzungsprodukte der peroxidischen Vernetzungsmittel zur Blasenbildung im Gummi kommen.

Ein zusätzliches bekanntes Problem ist die hohe Klebrigkeit vieler EVM-Mischungen, die eine Verarbeitung erschwert und häufig einen Einsatz von Verarbeitungshilfsmitteln in höheren Dosierungen nötig macht. Diese können unerwünschte Nebeneffekte, wie Ausblühen, Formverschmutzung und/oder verringerte Konfektionsklebrigkeit haben.

Ethylen und Vinylacetat lassen sich bekanntlich in unterschiedlichen Mengenverhältnissen bei statistischer Verteilung der copolymerisierten Monomereinheiten radikalisch polymerisieren. Die Copolymerisation kann grundsätzlich durch Emulsionspolymerisation, Lösungspolymerisation oder Hochdruckmassepolymerisation erfolgen.

Ethylen-Vinylacetat-Copolymerisate mit einem Vinylacetat-Gehalt von mindestens 30 Gew.-% können beispielsweise nach einem Lösungspolymerisationsverfahren bei mittleren Drücken hergestellt werden. Dabei wird die Polymerisation mit Hilfe von radikalisch zerfallenden Initiatoren initiiert. Unter radikalisch zerfallenden Initiatoren sind vor allem Hydroperoxide, Peroxide sowie Azoverbindungen, wie etwa ADVN (2'-Azobis(2,4-dimethylvaleronitril)), zu verstehen. Üblicherweise wird das Verfahren bei Temperaturen im Bereich von 30 bis 150°C, und einem Druck im Bereich von 40 bis 1000 bar durchgeführt. Als Lösungsmittel verwendet man beispielsweise tert.-Butanol oder Gemische aus tert.-Butanol, Methanol und Kohlenwasserstoffen, in denen die Polymerisate auch während des Polymerisationsprozesses in Lösung bleiben.

EP 0 374 666 B1 beschreibt auch ein Verfahren zur Herstellung von Ethylen/Vinylester-Copolymeren mit erhöhter Beständigkeit gegen organische Lösemittel, Kraftstoffe und Öle und hoher Flexibilität auch bei tiefen Temperaturen. Darin wird unter anderem ein Ethylen-Vinylacetat-Glycidylmethacrylat-Copolymerisat beschrieben, das durch ein in einer Kaskade kontinuierlich durchgeführtes Lösungspolymerisationsverfahren mit definierten Parametern (Lösungsmittelgehalt, Druck, Temperaturführung, Umsatz) hergestellt wird, wobei das Copolymerisat einen Glycidylmethacrylat-Gehalt von 8,5 Gew.-% und eine Mooney-Viskosität von 14 (ML (1+4) 100°C) aufweist. Eine Vulkanisation dieser Produkte wird im Patent nicht beschrieben, allerdings wird erwähnt, daß die hergestellten Polymere peroxidisch und gegebenenfalls über funktionelle Gruppen wie - $CO_2H$, -OH oder Epoxide aminisch oder über Metallionen ionisch vernetzt werden könnten und nach der Vulkanisation geringe Blasenbildung und bessere Entformbarkeit in der Wärme als die Produkte des Standes der Technik zeigen würden.

Bei der in EP 0 374 666 B1 beschriebenen Herstellung eines Ethylen-Vinylacetat-Glycidylmethacrylat-Copolymeren wird die Gesamtmenge des radikalisch zerfallenden Initiators zusammen mit der Gesamtmenge Glycidylmethacrylat (GMA) zudosiert, wodurch die Polymerisation gestartet wird, d.h. sämtliches Glycidylmethacrylat liegt beim Start der Polymerisationsreaktion in der Reaktionslösung vor. In besagtem Dokument werden keinerlei Aussagen über die Einheitlichkeit des Polymers getätigt. Die physikalisch mechanischen Eigenschaften des Copolymeren, sowie eine Compoundierung desselben sind nicht beschrieben.

EP 2 565 229 A1 beschreibt die Herstellung eines Ethylen-Vinylacetat-Glycidylmethacrylat-Copolymeren mit einem Glycidylmethacrylat-Gehalt von 6,7 Gew.-%, wobei ein Teil des Glycidylmethacrylats nach Reaktionsbeginn zudosiert wird. Dabei werden keinerlei Aussagen über die Einheitlichkeit des Polymers getätigt. Die physikalisch mechanischen Eigenschaften des Copolymeren sind nicht beschrieben, nur eine Compoundierung mit carboxyliertem NBR. Allerdings schränkt die Verwendung von ökonomisch unattraktivem und aufwändig zu verarbeitendem carboxyliertem NBR die Verwendbarkeit in der Praxis deutlich ein, zudem besteht durch die Doppelbindungen in der Hauptkette des NBR weiterhin die Gefahr einer Bildung von Ozonrissen.

Versuche zur Vernetzung einer Mischung eines Copolymeren gemäß EP 0 374 666 B1 mit einem niedermolekularen Vernetzer und Füllstoff führte zu unbefriedigenden Vulkanisateigenschaften in Bezug auf Zugfestigkeit, Modul und Druckverformungsrest.

Vernetzungsversuche mit einer Mischung des in EP 2 565 229 A1 beschriebenen Copolymeren mit einem niedermolekularen Vernetzer und Füllstoff führte andererseits einer ungenügenden Bruchdehnung.

DE 3525695 beschreibt die Vulkanisation von epoxygruppenhaltigen Acrylelastomeren mit Polycarbonsäuren oder Polycarbonsäureanhydriden und entweder einem quaternären Ammonium oder Phosphoniumsalz. Weder wird eine Zugabe des epoxygruppenhaltigen Monomers nach Polymerisationsstart noch eine verbesserte Entformbarkeit oder Verbesserung der dynamischen Eigenschaften erwähnt.

Die Aufgabe der vorliegenden Erfindung bestand darin, Ethylen-Vinylacetat-Copolymere und daraus zugängliche vulkanisierbare Zusammensetzungen bereitzustellen, die möglichst viele der folgenden Eigenschaften gegenüber dem Stand der Technik beibehalten bzw. verbessern: Verarbeitungssicherheit, geringe Klebrigkeit und gute Lagerstabilität, sowie ausgezeichnete mechanische und dynamische Eigenschaften, gute Wärmealterungs-, Witterungs- und Ozonbeständigkeit und geringe Druckverformungsreste der daraus erhältlichen Vulkanisate.

Gegenstand der Erfindung ist ein epoxygruppenhaltiges-Ethylen-Vinylacetat-Copolymer mit einem Vinylacetatgehalt von mindestens 35 Gew.-%, bevorzugt mindestens 40 Gew.-%, besonders bevorzugt mindestens 45 Gew.-% und ganz besonders bevorzugt mindestens 50 Gew.-% mit einem Ethylengehalt von mindestens 10 Gew.-%, bevorzugt mindestens 15 Gew.-%, besonders bevorzugt mindestens 20 Gew.-% und ganz besonders bevorzugt mindestens 25 Gew.-% bezogen auf das epoxygruppenhaltige-Ethylen-Vinylacetat-Copolymer. Für den Fachmann ist dabei selbstverständlich, dass bei den auf das Copolymer bezogenen Angaben wie Vinylacetatgehalt, Ethylengehalt usw. der Gehalt an Wiederholungseinheiten gemeint ist, die sich von den jeweiligen Monomeren ableiten.

Zur Illustrierung sind der Anmeldung 4 Figuren beigefügt:

Fig. 1: Ethylen-Vinylacetat-Glycidylmethacrylat-Copolymer bei welchem GMA auch nach Beginn der Polymerisation zugegeben wurde.

Fig. 2: Ethylen-Vinylacetat-Glycidylmethacrylat-Copolymer bei welchem GMA nur zu Beginn der Polymerisation zugegeben wurde.

Fig. 3: Dynamische Reißeigenschaften: Risswachstum

Fig. 4: Dynamische Reißeigenschaften: Lebensdauer

Das erfindungsgemäße epoxygruppenhaltige-Ethylen-Vinylacetat-Copolymer weist einen Mindestgehalt an Wiederholungseinheiten abgeleitet von einem oder mehreren epoxygruppenhaltigen Monomeren von 0,1 Gew.-%, bevorzugt 0,5 Gew.-% und besonders bevorzugt 0,8 Gew.-% und einen Maximalgehalt an besagten Monomeren von 6,2 Gew.-%, bevorzugt 5,0 Gew.-% und besonders bevorzugt 4,5 Gew.-%, jeweils bezogen auf das epoxygruppenhaltige Ethylen-Vinylacetat-Copolymer auf. Bevorzugt ist nur eine Art epoxypruppenhaltiges Monomer enthalten.

Das erfindungsgemäße epoxygruppenhaltige-Ethylen-Vinylacetat-Copolymer weist nach Vulkanisation mit Glutarsäure und Tetrabutylammoniumbromid einen Gelgehalt angegeben in Gew.-% von mindestens 50 Gew.-%, vorzugsweise mindestens 80 Gew.-%, besonders bevorzugt mindestens 85 Gew.-% und ganz besonders bevorzugt von 90 bis 100 Gew.-% auf. Die Durchführung der Vulkanisation und die Bestimmung des Gelgehalts erfolgen dabei nach der im experimentellen Teil beschriebenen Methode.

Compounds enthaltend das erfindungsgemäße epoxygruppenhaltige Ethylen-Vinylacetat-Copolymer weisen verbesserte Vulkanisations- und Vulkanisateigenschaften auf. Die Vulkanisate neigen zudem bei Vulkanisation mit Polysäuren und in Gegenwart von Sauerstoff nicht zum Klebrigwerden.

Vorzugsweise weist das erfindungsgemäße epoxygruppenhaltige Ethylen-Vinylacetat-Copolymere Wiederholungseinheiten abgeleitet von einem oder mehreren, besonders bevorzugt von einem, epoxygruppenhaltigen Monomeren der allgemeinen Formel (I)

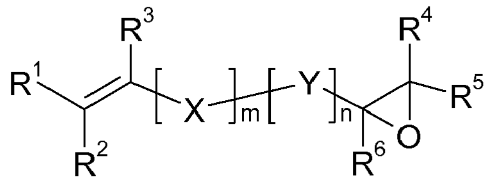

(I)

auf, worin

| | |
|---|---|
| **m** | 0 oder 1 ist und |
| X | für O, $O(CR_2)_p$, $(CR_2)_pO$, C(=O)O, $C(=O)O(CR_2)_p$, C(=O)NR, $(CR_2)_p$, N(R), $N(R)(CR_2)_p$, P(R), $P(R)(CR_2)_p$, P(=O)(R), $P(=O)(R)(CR_2)_p$, S, $S(CR_2)_p$, S(=O), $S(=O)(CR_2)_p$, $S(=O)_2(CR_2)_p$ oder $S(=O)_2$ steht, wobei R in diesen Resten die gleiche Bedeutungen besitzen kann wie $R^1$-$R^6$ |
| **Y** | für Wiederholungseinheiten abgeleitet von einem oder mehreren, vorzugsweise einem ein- oder mehrfach ungesättigten Monomeren steht, umfassend konjugierte oder nicht-konjugierte Diene, Alkine und Vinylverbindungen, oder für ein Strukturelement, welches sich ableitet von Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide, |
| **n und p** | gleich oder verschieden sind und jeweils im Bereich von 0 bis 10000, bevorzugt 0 bis 100 liegen und ganz besonders bevorzugt n im Bereich von 0 bis 100 liegt und gleichzeitig p = 0 ist, |
| **R, $R^1$, $R^2$, $R^3$, $R^4$, $R^5$ und $R^6$** | gleich oder verschieden sind und für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkylthio, Arylthio, Sulfanyl, Thiocarboxy, Sulfinyl, Sulfono, Sulfino, Sulfeno, Sulfonsäuren, Sulfamoyl, Hydroxyimino, Alkoxycarbonyl, F, Cl, Br, I, Hydroxy, Phosphonato, Phosphinato, Silyl, Silyloxy, Nitril, Borate, Selenate, Carbonyl, Carboxy, Oxycarbonyl, Oxysulfonyl, Oxo, Thioxo, Epoxy, Cyanate, Thiocyanate, Isocyanate, Thioisocyanate oder Isocyanide stehen. |

Optional sind die für die Reste R, $R^1$ bis $R^6$ und die Wiederholungseinheiten Y der allgemeinen Formel (I) genannten Bedeutungen jeweils ein- oder mehrfach substituiert.

Bevorzugt weisen die folgenden Reste aus den Bedeutungen für R, $R^1$ bis $R^6$ eine derartige ein- oder mehrfache Substitution auf: Alkyl, Carbocyclyl, Heterocyclyl, Aryl, Heteroaryl, Arylalkyl, Heteroarylalkyl, Alkoxy, Aryloxy, Alkylthio, Arylthio, Amino, Amido, Carbamoyl, F, Cl, Br, I, Hydroxy, Phosphonato, Phosphinato, Sulfanyl, Thiocarboxy, Sulfinyl, Sulfono, Sulfino, Sulfeno, Sulfamoyl, Silyl, Silyloxy, Carbonyl, Carboxy, Oxycarbonyl, Oxysulfonyl, Oxo, Thioxo, Borate, Selenate und Epoxy. Als Substituenten kommen - soweit sich chemisch stabile Verbindungen ergeben - alle Bedeutungen in Frage, die R annehmen kann. Besonders geeignet als Substituenten sind Alkyl, Carbocyclyl, Aryl, Halogen, bevorzugt Fluor, Chlor, Brom oder Iod, Nitril (CN) und Carboxy.

**Ganz besonders bevorzugt** werden ein oder mehrere epoxygruppenhaltige Monomere der allgemeinen Formel (I) eingesetzt, worin **X, R und $R^1$** bis **$R^6$** die zuvor für die allgemeine Formel (I) genannten Bedeutungen besitzen, **m** gleich 1 ist, **p** gleich 1 ist und **n** gleich Null ist.

Bevorzugte Beispiele epoxygruppenhaltiger Monomere sind 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethyl-meth-acrylat, (6',7'-Epoxyheptyl)acrylat, (6',7'-Epoxyheptyl)-methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxy-heptylvinylether, o-Vinyl-benzylglycidylether, m-Vinylbenzylglycidylether, p-Vinylbenzylglycidylether und 3-Vinylcyclohexenoxid.

Meist bevorzugt wird als epoxygruppenhaltiges Monomer ein Glycidyl(alkyl)acrylat, vorzugsweise Glycidylacrylat und/oder Glycidylmethacrylat eingesetzt.

Die erfindungsgemäßen epoxygruppenhaltige Ethylen-Vinylacetat-Copolymere können neben Wiederholungseinheiten, die sich von Ethylen, Vinylacetat und epoxygruppenhaltigen Monomeren ableiten auch Wiederholungseinheiten enthalten, die sich von weiteren Monomeren ableiten, beispielsweise solche ausgewählt aus der Gruppe enthaltend Alkylacrylate mit 1 bis 8 Kohlenstoffatomen im Alkylteil, vorzugsweise Methylacrylat, Ethylacrylat, Propylacrylat, n-Butylacrylat, 2-Ethylhexylacrylat und n-Octylacrylat,und die entsprechenden Methacrylate; Alkoxyalkylacrylate mit 1 bis 4 Kohlenstoffatomen in jedem der Alkoxy- und Alkylteile, vorzugsweise Methoxymethylacrylat, Methoxyethylacrylat, Ethoxyethylacrylat, Butoxyethylacrylat und Methoxyethoxyethylacrylat; Polyethylenglycolacrylate und Polyethylenglycolmethacrylate, Vinylester, vorzugsweise Vinylpropionat und Vinylbutyrat, Vinylketone, vorzugsweise Methylvinylketon und Ethylvinylketon, vinylaromatische Verbindungen, vorzugsweise Styrol, $\alpha$-Methylstyrol und Vinyltoluol; konjugierte Diene, vorzugsweise Butadien und Isopren; $\alpha$-Monoolefine, vorzugsweise Propylen und 1-Buten; Vinylmonomere mit einer Hydroxylgruppe, vorzugsweise $\beta$-Hydroxyethylacrylat und 4-Hydroxybutylacrylat; Vinyl- und Vinylidenmonomere mit einer Nitrilgruppe, vorzugsweise Acrylnitril, Methacrylnitril und 3-Cyanoethylacrylat; ungesättigte Amidmonomere, vorzugsweise Acrylamid und N-Methylmethacrylamid und Kohlenmonoxid. Diese Monomeren können jeweils einzeln oder in Kombination verwendet werden. Der Gesamtanteil an eingebauten Monomeren, die nicht Vinylacetat, Ethylen und epoxygruppenhaltige Monomere sind beträgt gewöhnlich weniger als 25 Gew.-%, bevorzugt weniger als 20 Gew.-%, weiter bevorzugt weniger als 15 Gew.-%, noch weiter bevorzugt weniger als 10 Gew.-%, besonders bevorzugt weniger als 5 Gew.-% und ganz besonders bevorzugt weniger als 1 Gew.-% bezogen auf das epoxygruppenhaltige Copolymer. Bei der meist bevorzugten Ausführungsform handelt es sich beim epoxygruppenhaltigen Copolymeren um ein Terpolymer, dessen Wiederholungseinheiten, die sich von Ethylen, Vinylacetat und epoxygruppenhaltigen Monomeren ableiten. Der Gesamtgehalt an Ethylen, Vinylacetat, epoxygruppenhaltigen Monomeren und den ggf. eingesetzten oben genannten weiteren Monomeren addiert sich zu 100 Gew.-% bezogen auf das epoxygruppenhaltige Copolymer.

Bevorzugt sind die epoxygruppenhaltigen Monomere statistisch über die Polymerkette des erfindungsgemäßen epoxygruppenhaltigen Ethylen-Vinylacetat-Copolymeren verteilt.

Es hat sich überraschenderweise gezeigt, dass ein niedriger Gehalt an epoxygruppenhaltigem Monomer die Bruchdehnung stark erhöht. So weist zum Beispiel ein Vulkanisat auf Basis eines Glycidylmethacrylat-Ethylen-Vinylacetat-Copolymeren mit 6,9 Gew.-% Glycidylmethacrylat eine Bruchdehnung von 131 % auf, weshalb es für viele Anwendungen, wie z.B. flexible Dichtmaterialien nicht geeignet ist. Im Gegensatz dazu weisen die auf erfindungsgemäßen Glycidylmethacrylat-Ethylen-Vinylacetat-Copolymeren basierenden Vulkanisate typischerweise eine Bruchdehnung von mehr als 150 %, vorzugsweise mehr als 180 % und besonders bevorzugt von mehr als 210 % auf.

Die erfindungsgemäßen epoxygruppenhaltigen Ethylen-Vinylacetat-Copolymere besitzen üblicherweise Mooney-Viskositäten (ML (1+4) 100°C) $\geq$ 15 Mooney-Einheiten (MU), bevorzugt $\geq$ 17 Mooney-Einheiten, besonders bevorzugt $\geq$ 20 Mooney-Einheiten. Die Bestimmung der Werte für die Mooney-Viskosität (ML (1+4) 100°C) erfolgt mittels eines Scherscheibenviskosimeters nach ISO 289 (ISO 289-1:2014-02) bei 100 °C.

Die epoxygruppenhaltigen Ethylen-Vinylacetat-Copolymere besitzen typischerweise ferner eine Polydispersität PDI = $M_w/M_n$, (wobei $M_w$ das Gewichtsmittel und $M_n$ das Zahlenmittel des Molekulargewichts darstellt) im Bereich von 2 bis 10, bevorzugt im Bereich von 3 bis 6.

Die erfindungsgemäßen epoxygruppenhaltigen Ethylen-Vinylacetat-Copolymere besitzen üblicherweise eine gewichtsmittlere Molmasse Mw im Bereich von 30000 g/mol bis 400000 g/mol, bevorzugt von 60000 g/mol bis 375000 g/mol und ganz besonders bevorzugt von 100000 g/mol bis 340000 g/mol.

Die Glastemperaturen der epoxygruppenhaltigen Ethylen-Vinylacetat-Copolymere liegen im Bereich von +25 °C bis -45 °C, vorzugsweise im Bereich von +20°C bis -40 °C und besonders bevorzugt im Bereich von +15 °C bis -35 °C (gemessen mittels DSC mit einer Heizrate von 20K/min).

Ein weiterer Gegenstand der Erfindung ist ein Verfahren zur Herstellung der erfindungsgemäßen epoxygruppenhaltigen Copolymeren, dadurch gekennzeichnet, dass nach dem Start der Polymerisationsreaktion von Ethylen und Vinylacetat epoxygruppenhaltiges Monomer zur Reaktionsmischung zugegeben wird. Die Reaktionsmischung kann beim Start auch noch ein oder mehrere der obigen weitere Monomere, sowie bereits epoxygruppenhaltige Monomere enthalten. Das Verfahren wird dabei typischerweise als Batchverfahren z.B. in einem Rührkessel oder als kontinuierliches Verfahren z.B. in einer Kesselkaskade oder einem Rohrreaktor durchgeführt. Die Zugabe des epoxygruppenhaltigen Monomers nach dem Start ist bei einem Batch-Prozess so zu verstehen, dass nach dem erfolgten Reaktionsstart eine portionsweise oder kontinuierliche, vorzugsweise kontinuierliche Zugabe des epoxygruppenhaltigen Monomeren zur Reaktionsmischung erfolgt, wohingegen bei einem kontinuierlichen Verfahren die Zugabe des epoxygruppenhaltigen Monomeren zur Reaktionsmischung an mindestens einer, vorzugsweise an mehreren Stellen erfolgt, welche sich stromabwärts von der Stelle des Reaktionsstarts befindet bzw. befinden. Der Reaktionsstart ist dabei der Zeitpunkt bzw. die Stelle, an der erstmals die Polymerisation von zumindest Vinylacetat und Ethylen erfolgt.

Bevorzugt wird das Verfahren zur Herstellung der erfindungsgemäßen epoxygruppenhaltigen-Ethylen-Vinylacetat-Copolymeren als Lösungspolymerisation bei Temperaturen >55°C, besonders bevorzugt >58°C, meist bevorzugt

bei >60°C durchgeführt. Üblicherweise erfolgt die Polymerisation bei Drücken von 330 - 450 bar. Die mittlere Verweilzeit liegt typischerweise im Bereich von 0,5 - 12 Stunden.

In einer bevorzugten Ausführungsform enthält die Reaktionslösung:

i) 1 bis 70 Gew.-%, bevorzugt 10 bis 60 Gew.-%, Ethylen,

ii) 1 bis 99 Gew.-%, bevorzugt 30 - 90 Gew.-% Vinylacetat und

iii) 0 bis 2 Gew.-% epoxygruppenhaltiges Monomer

jeweils bezogen auf die Summe der Komponenten i) + ii) + iii).

Typischerweise enthält die Reaktionslösung 20 - 60 Gew.-% (bezogen auf die Gesamtmasse der Reaktionslösung) eines polaren organischen Lösungsmittels, bevorzugt eines alkoholischen Lösungsmittels mit einem bis 4 C Atomen, besonders bevorzugt t*ert.*-Butanol.

Geeigneterweise enthält die Reaktionslösung beim Start der Polymerisation bereits epoxygruppenhaltiges Monomer, bevorzugt in einer Menge von bis zu 50 Gew.-%, weiter bevorzugt bis zu 33 Gew.-%, besonders bevorzugt bis zu 25 Gew.-%, ganz besonders bevorzugt 10 Gew.-%, und meist bevorzugt im Bereich von 1 bis 5 Gew.-%, bezogen auf die Gesamtmenge an zuzugebendem epoxygruppenhaltigem Monomer.

Die Polymerisation erfolgt mittels eines radikalisch zerfallenden Initiators, dessen Anteil bezogen auf die Summe von Komponenten i) + ii) üblicherweise 0,001 bis 1,5 Gew.-% beträgt.

Nach Start der Polymerisierungsreaktion wird epoxygruppenhaltiges Monomer in Substanz oder als Funktionalisierungslösung, d.h. als Mischung mit Vinylacetat und/oder mit dem verwendeten Prozeßlösemittel zudosiert.

Typischerweise enthält die Funktionalisierungslösung:

iv) 5 bis 95 Gew.-% Vinylacetat und
v) 5 bis 95 Gew.-% epoxygruppenhaltiges Monomer

jeweils bezogen auf die Summe der Komponenten (iv + v), sowie
20 - 60 Gew.-% des polaren organischen Lösungsmittels, bezogen auf die Summe der Komponenten iv) + v) + polares organisches Lösungsmittel.

Die Zugabe der obigen Funktionalisierungslösung hat gegenüber der Zugabe in Substanz den Vorteil daß die Mischung über einen weiten Temperaturbereich flüssig ist und daher im Allgemeinen keine Beheizung der Lagerbehälter und Leitungen nötig ist.

Bevorzugt erfolgt eine Zudosierung des epoxygruppenhaltigen Monomeren zu mindestens einem Zeitpunkt (bei einem Batchverfahren) bzw. an mindestens einer Stelle der Reaktionsführung (bei einem kontinuierlichen Verfahren), an dem die Reaktionsmischung einen Feststoffgehalt von mindestens 1 Gew.-%, vorzugsweise mindestens 2 % Gew.-%, besonders bevorzugt mindestens 5 Gew.-%, und ganz besonders bevorzugt mindestens 10 Gew.-% aufweist.

Bevorzugt erfolgt die Zudosierung der Funktionalisierungslösung bei Batchpolymerisationen kontinuierlich. Die Polymerisation wird besonders bevorzugt kontinuierlich in einer Reaktorkaskade durchgeführt. Dabei erfolgt eine Zudosierung der Funktionalisierungslösung typischerweise in mindestens einem, vorzugsweise in mehreren, dem Reaktor, in dem die Polymerisation gestartet wird, nachstehenden Reaktoren, typischerweise bei einer Temperatur im Bereich von 55 °C - 110 °C. Im Falle der Verfahrensdurchführung in einem Rohrreaktor erfolgt die Zugabe an mindestens einer Stelle stromabwärts zu derjenigen Stelle, an der die Reaktion gestartet wird

Die erfindungsgemäße Zudosierung der Funktionalisierungslösung führt zu einer höheren chemischen Einheitlichkeit des erhaltenen epoxygruppenhaltigen Ethylen-Vinylacetat-Polymeren und somit bei der Vulkanisation mit Polycarbonsäure zu einem gleichmäßigeren Netzwerk, was sich letztendlich in einem höheren Gelgehalt widerspiegelt.

Ohne Zudosierung des epoxyhaltigen Monomers, wie es in EP 0 374 666 B1 beschrieben wird, liegt die gesamte Menge an epoxyhaltigen Monomer bereits zu Anfang der Polymerisation vor, wodurch vermutlich eine Blockbildung des Glycidylmethacrylat erfolgt, welche zu einer uneinheitlichen Verteilung im Polymer führt. Dies äußert sich u.a. in einem wesentlich niedrigeren Gelgehalt nach Vulkanisation mit einer Dicarbonsäure.

Ein hoher Gelgehalt der die Copolymere enthaltenen Vulkanisate mit einer Dicarbonsäure ist ein guter Indikator für den gleichmäßigen Einbau des Glycidylmethacrylats und korreliert mit verschiedenen physikalischen Eigenschaften der unter Verwendung dieser Copolymere hergestellten Vulkanisate, wie z.B. Bruchdehnung, Zugfestigkeit und Druckverformungsrest.

Bei der 2-D Chromatographie zeigt sich ebenfalls die höhere chemische Einheitlichkeit des erfindungsgemäßen epoxygruppenhaltigen Ethylen-Vinylacetat-Copolymeren. Bei dieser Meßmethode erfolgt die Auftrennung vorzugsweise nach Polarität und hydrodynamischem Volumen. Typischerweise weist das 2D-Chromatogramm von erfindungsgemäßen epoxygruppenhaltigen Ethylen-Vinylacetat-Copolymeren im Wesentlichen nur eine Polymerfraktion, d.h. die aufsummierte Absorption des stärksten Signals ist mindestens 4 mal, vorzugsweise mindestens 5 mal besonders bevorzugt mindestens 10 mal und ganz besonders bevorzugt mindestens 50 mal größer als die Signale weiterer Polymerfraktionen.

Die vorliegende Erfindung betrifft daher auch epoxygruppenhaltige Copolymere mit einem Gehalt an einpolymerisiertem Vinylacetat von mindestens 35 Gew.-%, bevorzugt mindestens 40 Gew.-%, besonders bevorzugt mindestens 45 Gew.% und ganz besonders bevorzugt mindestens 50 Gew.-%, einem Gehalt an einpolymerisiertem Ethylen von mindestens 10 Gew.-%, bevorzugt mindestens 15 Gew.-%, besonders bevorzugt von mindestens 20 Gew.-%, und ganz besonders bevorzugt von 20 bis 49 Gew.-% und einem Gehalt an einpolymerisierten epoxygruppenhaltigen Monomeren von 0,1 bis 6,2 Gew.-%, bevorzugt 0,5 bis 5,0 Gew.-%, besonders bevorzugt von 0,8 bis 4,5 Gew.-%, jeweils bezogen auf das epoxygruppenhaltige Copolymer, welches im 2D-Chromatogramm bevorzugt nach der im experimentellen Teil beschriebenen Methode im Wesentlichen nur eine Polymerfraktion aufweist, d.h. die aufsummierte Absorption des Signals der größten Polymerfraktion ist mindestens 4 mal, vorzugsweise mindestens 5 mal besonders bevorzugt mindestens 10 mal und ganz besonders bevorzugt mindestens 50 mal größer als die aufsummierte Absorption der Signale jeweiliger weiterer Polymerfraktionen.

Durch die Zudosierung der von epoxyhaltigem Monomer oder der Funktionalisierungslösung gemäß der vorliegenden Erfindung kann ein nahezu vollständiger Einbau der epoxygruppenhaltigen Monomere bei weitgehend statistischer Verteilung der epoxygruppenhaltigen Monomere im Polymerrückgrat stattfinden und zugleich eine Blockbildung der epoxygruppenhaltigen Monomeren und die Bildung von reinen Ethylen-Vinylacetat-Copolymeren vermieden, bzw. zumindest reduziert werden.

Zudem kann durch das erfindungsgemäße Verfahren der Umsatz bei geringen Einsatzmengen an epoxygruppenhaltigen Monomeren deutlich erhöht werden konnte. Vorzugsweise weist die Copolymerisatlösung nach Beendigung der Polymerisation weniger als 300 ppm, bevorzugt weniger als 200 ppm und meist bevorzugt weniger als 150 ppm nicht gebundener epoxygruppenhaltiger Monomere auf.

Vorzugsweise werden als Polymerisationsinitiator Peroxidicarbonate, Hydroperoxide, Peroxide oder Azoverbidnungen wie 2,2'-Azobis(2,4-dimethylvaleronitril) (ADVN), 2,2'-Azoisobuytronitril (AIBN), 2,2'-Azobis(4-methoxy-2,4dimethylvaleronitiril), 2,2'-Azobis(2-methylbutyronitril), 1,1'-Azobis(cyclohexane-1-carbonitril), Dimethyl-2,2'-azobis(2-methyl-propionat), 2,2'-Azobis[N-(2-propenyl)-2-methylpropionamide], 1-[(1-cyano-1-methyl-ethyl)azo]-formamide, 2,2'-Azobis(N-butyl-2-methylpropionamide), 2,2'-Azobis(N-cyclohexyl-2-methylpropionamid), 2,2'-Azobis[2-(2-imidazolin-2-yl)propane]dihydrochlorid, 2,2'-Azobis[2-(2-imidazolin-2-yl)propane]disulfatdihydrat, 2,2'-Azobis(2-methylpropion-amidine)dihydrochlorid, 2,2'-Azobis[N-(2-carboxyethyl)-2-methylpropionamidin]-hydrat, 2,2'-Azobis{2-[1-(2-hydroxyethyl)-2-imidazolin-2-yl]propane}dihydrochlorid, 2,2'-Azobis[2-(2-imidazolin-2-yl)propan], 2,2'-Azobis(1-imino-1-pyrrolidino-2-ethylpropan)dihydrochlorid, 2,2'-Azobis{2-methyl-N-[1,1-bis(hydroxymethyl)-2-hydroxyethl]propionamid}, 2,2'-Azobis-[2-methyl-N-(2-hydroxyethyl)propionamid], Acetylcyclohexansulfonylperoxid, Bis(4-tert-Butylcyclohexyl)peroxydicarbonat und Bis(2-ethylhexyl)peroxydicarbonat eingesetzt. Besonders bevorzugt werden als Polymerisationinitiator 2,2'-Azobis(2,4-dimethyl-valeronitril) (ADVN), 2,2'-Azoisobuytro-nitril (AIBN) oder 2,2'-Azobis(4-methoxy-2,4dimethylvaleronitiril) eingesetzt.

Die vorliegende Erfindung betrifft auch vulkanisierbare Zusammensetzungen enthaltend jeweils mindestens ein erfindungsgemäßes epoxygruppenhaltiges Copolymer, einen niedermolekularen Vernetzer und ein Vernetzungshilfsmittel.

Als niedermolekular Vernetzer sind dabei derartige zu verstehen, deren Molmasse weniger als 2000 g/mol, vorzugsweise weniger als 1000 g/mol, weiter bevorzugt weniger als 600 g/mol besonders bevorzugt weniger als 400 g/mol und ganz besonders bevorzugt weniger als 200 g/mol beträgt. Polycarbonsäurepolyanhydride, wie Polyazelainsäurepolyanhydrid deren Wiederholungseinheit in diesem Massebereich liegt sind ebenfalls umfasst, da diese sich bei der Vulkanisation in ihre niedermolekularen Äquivalente umwandeln.

Vorzugsweise handelt es sich beim niedermolekularen Vernetzer um aromatische, aliphatische lineare, cycloaliphatische oder heterocyclische niedermolekulare Vernetzer , bevorzugt in Form einer Polycarbonsäure, eines Polycarbonsäureesters, eines Polycarbonsäureanhydrids oder einer Mischung davon, weiter bevorzugt um eine aromatische, aliphatische lineare, cycloaliphatische oder heterocyclische Di-,Tri- oder Tetracarbonsäure, besonders bevorzugt um aliphatische Di-,Tri- oder Tetracarbonsäure, ganz besonders bevorzugt um eine aliphatische Dicarbonsäure und meist bevorzugt um Glutarsäure, Dodecandisäure oder Adipinsäure. Mischungen solcher Verbindungen sind ebenfalls möglich und können durch ihren niedrigeren Schmelzpunkt vorteilhaft sein, da das Einmischen erleichtert wird.

Beispiele für aliphatische niedermolekulare Vernetzer sind: Malonsäure, Bernsteinsäure, Glutarsäure, Adipinsäure, Pimelinsäure, Azelainsäure, Sebacinsäure, Dodecandisäure, Tridecantrisäure, Tetradecandisäure, Octadecandisäure, Eicosandisäure, Methylmalonsäure, Ethylmalonsäure, Tetramethylbernsteinsäure, 2;2'-Dimethylbernsteinsäure, Apfelsäure, α-Methylapfelsäure, α-Hydroxyglutarsäure, α-Hydroxyadipinsäure, Oxobernsteinsäure, 2-Oxoadipinsäure, Acetylmalonsäure, 2-Hydroxyglutarsäure, Maleinsäure, Citraconsäure, Glutaconsäure, Muconsäure, Citronensäure, Weinsäure, 1,2,3-Propantricarbonsäure, 1,2,3-Propentricarbonsäure, 1,3,5-Pentantricarbonsäure, Cystin, Asparaginsäure, Glutaminsäure, 2-Hydroglutaminsäure, Iminodiessigsäure, Ethylendiamintetraessigsäure, Maleinsäureanhydrid, Methylmaleinsäureanhydrid, Bernsteinsäureanhydrid, Dodecenylbernsteinsäureanhydrid, Ethylendiamintetraessigsäuredianhydrid, Polyacelainsäurepolyanhydrid, Glutarsäureanhydrid, 2,2'-Dimethylglutarsäureanhydrid, Sebacinsäureanhydrid, Azelainsäureanhydrid, Dodecandisäureanhydrid, Eicosandisäureanhydrid, Citraconsäureanhydrid, Cyclo-maleinsäureanhydrid, Diglykolsäureanhydrid und Thioglykolsäureanhydrid.

Beispiele für aromatische niedermolekulare Vernetzer sind: Phthalsäure, 3-Methylphthalsäure, Terephthalsäure, Phthalonsäure, Hemipininsäure, Benzophenondicarbonsäure, Phenylbernsteinsäure, Trimellitsäure, Pyromellitsäure, Phthalsäureanhydrid, Diphensäureanhydrid, Isatonsäureanhydrid, Trimellitsäureanhydrid, Pyromellitsäureanhydrid, Tetrahydrophthalsäureanhydrid, Tetrachlorphthalsäureanhydrid und Tetrabromphthalsäureanhydrid.

Beispiele für cycloaliphatische niedermolekulare Vernetzer sind: Hexahydrophthalsäure, Hexahydroterephthalsäure, cis-1,3-Cyclopentandicarbon-säure, cis-1,4-Cyclohexandicarbonsäure, 1,5-Cyclooctandicarbonsäure, Hexahydro-phthalsäureanhydrid, Methylhexahydrophthalsäureanhydrid und 1,2-Cyclohexan-dicarbonsäureanhydrid,

Die niedermolekularen Vernetzer können einzeln oder in Kombination in einer Gesamtmenge von gewöhnlich 0,1 bis 15 Gew. Teilen, vorzugsweise 0,5 bis 5 Gew. Teilen, je 100 Gew. Teile des epoxygruppenhaltigen Copolymeren verwendet werden. Besonders bevorzugt wird pro Epoxygruppe des epoxygruppenhaltigen Copolymeren 0,7 bis 1,3, weiter bevorzugt 0,9 bis 1,1 und ganz besonders bevorzugt genau eine Carboxylgruppe des niedermolekularen Vernetzer zugegeben.

Als Vernetzungshilfsmittel wird mindestens ein quaternäres Ammoniumsalz oder Phosphoniumsalz der Formel

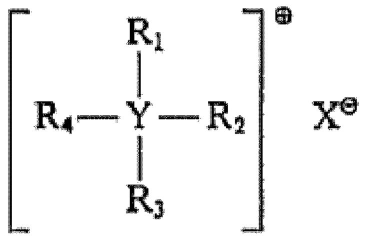

eingesetzt, worin Y für ein Stickstoff oder Phosphoratom, jeder der Reste $R_1$, $R_2$, $R_3$ und $R_4$ unabhängig voneinander für eine Alkyl, Aryl , Alkylaryl oder Polyoxyalkylengruppe, mit jeweils zwischen 1 und 25 Kohlenstoffatomen, wobei zwei oder drei dieser Gruppen gemeinsam mit dem Stickstoffatom oder dem Phosphoratom ein heterocyclisches Ringsystem bilden können, vorzugsweise für eine Alkyl, Aryl , Alkylarylgruppe mit jeweils zwischen 1 und 10 Kohlenstoffatomen und X- für ein sich von einer anorganischen oder organischen Säure ableitendes Anion steht.

Bevorzugte Anionen X- sind $Cl^-$, $Br^-$, $I^-$, $HSO_4^-$, $H_2PO_4^-$, $R_5COO^-$, $R_5OSO_3^-$, $R_5SO^-$ und $R_5OPO_3^-$ wobei $R_5$ für eine Alkyl, Aryl , Alkylarylgruppe mit jeweils zwischen 1 und 10 Kohlenstoffatomen steht.

Besonders bevorzugt wird das quaternäre Ammoniumsalz gewählt aus Tetraethylammoniumbromid, Tetrabutylammoniumchlorid, Tetrabutylammoniumbromid, Tetrabutylammoniumjodid, n-Dodecyltrimethylammoniumbromid, Cetyldimethylbenzylammoniumchlorid, Methylcetyldibenzylammoniumbromid, Cetyldimethylethylammoniumbromid, Cetyltrimethylammoniumbromid, Octadecyltrimethylammoniumbromid, Cetylpyridiumchlorid, Cetylpyridiumbromid, 1,8-Diaza-bicyclo[5.4.0]undecen-7-methylammoniummethosulfat, 1,8-Diaza-bicyclo[5.4.0]undecen-7-benzylammoniumchlorid, Cetyltrimethylammoniumalkylphenoxypoly(ethylenoxy)ethylphosphat, Cetylpyridiumsulfat, Tetraethylammoniumacetat, Trimethylbenzylammoniumbenzoat, Trimethylbenzylammonium-p-toluolsulfonat und Trimethylbenzylammoniumborat. Ganz besonders bevorzugt wird Tributylammoniumbromid und/oder Hexadecyltrimethylammoniumbromid eingesetzt.

Besonders bevorzugt wird das quaternäre Phosphoniumsalz gewählt aus Triphenylbenzylphosphoniumchlorid, Triphenylbenzylphosphoniumbromid, Triphenylbenzylphosphoniumjodid, Triphenylmethoxymethylphosphoniumchlorid, Triethylbenzylphosphoniumchlorid, Tricyclohexylbenzylphosphoniumchlorid, Trioctylmethylphosphoniumdimethylphosphat, Tetrabutylphosphoniumbromid und Trioctylmethylphosphoniumacetat.

Die quaternären Ammonium- und Phosphoniumsalze können einzeln oder in Kombination in einer Menge von gewöhnlich 0,1 bis 10 Gew.-Teilen, vorzugsweise 0,5 bis 5 Gew.-Teilen, je 100 Gew.-Teile des epoxygruppenhaltigen Copolymeren verwendet werden. Der vorstehend angegebene Bereich für die Menge dieser Verbindungen, der auf dem epoxygruppenhaltigen Copolymeren basiert, wird im Hinblick auf die Vulkanisationsgeschwindigkeit, die Verfahrensstabilität und die mechanischen Eigenschaften sowie die bleibende Verformung des Vulkanisats bestimmt. Gewöhnlich schreitet, wenn die Menge geringer als 0,1 Gew.Teile ist, die Vulkanisation kaum voran, und man erhält kein Vulkanisat mit praktischer Verwertbarkeit. Andererseits wird, wenn die Menge 10 Gew.Teile überschreitet, die Vulkanisationsgeschwindigkeit außerordentlich schnell und die Verfahrensstabilität der Mischung sowie die Alterungseigenschaften des Vulkanisats verschlechtern sich.

Überraschend konnte festgestellt werden, dass bei der erfindungsgemäßen Vernetzung die Vulkanisationseigenschaften signifikant verbessert werden und auch die Eigenschaften des dadurch erhältlichen Vulkanisats wesentlich besser im Vergleich zum Stand der Technik sind, insbesondere hinsichtlich der Lebensdauer unter dynamischer Belastung.

Die erfindungsgemäße, vulkanisierbare Zusammensetzung wird vorzugsweise hergestellt, indem man das epoxygruppenhaltige Copolymer mit dem niedermolekularen Vernetzer, dem Vernetzungshilfsmittel und ggf. weiteren Chemikalien und Zuschlagstoffen, die gemeinhin in der Kautschukindustrie eingesetzt werden, wie z.B. Füllstoffen, Weichmachern, Antioxidantien, Verarbeitungshilfsmitteln und sonstigen Additiven mit Hilfe eines üblichen Mischaggregates, z.B. eines Walzwerks oder eines Innenmischers, mischt. Dabei kann sowohl ein- als auch mehrstufiges Mischverfahren angewendet werden.

Bevorzugt wird dabei sowohl der niedermolekularen Vernetzer, als auch das Vernetzungshilfsmittel in vordispergierter, polymergebundener Form zugegeben. Durch die Zugabe als Masterbatch wird eine deutlich bessere und gleichzeitig schonendere Einmischung erreicht, die Scorchgefahr verringert und bessere Endprodukteigenschaften erzielt. Insbesondere der Druckverformungsrest verbessert sich deutlich. Bevorzugt wird als polymerer Binder Levapren®, besonders bevorzugt Levapren® 400, 500 oder 600 verwendet. Typischerweise wird der niedermolekularen Vernetzer dabei in Mengen von 50 Gew.-% bis 95 Gew.-%, besonders bevorzugt 65 Gew.-% bis 85 Gew.-% bezogen auf das Gesamtgewicht des fertigen Masterbatches, in das Trägerpolymer eingemischt. Das Vernetzungshilfsmittel wird bevorzugt in Mengen von 50 Gew.-% bis 95 Gew.-%, besonders bevorzugt 65 Gew.-% bis 85 Gew.-% bezogen auf das Gesamtgewicht des fertigen Masterbatches, in das Trägerpolymer eingemischt.

Die Verwendung eines gemeinsamen Masterbatches enthaltend sowohl niedermolekularen Vernetzer, als auch das Vernetzungshilfsmittel ist ebenfalls möglich. In diesem Fall beträgt die Gesamtmenge an niedermolekularem Vernetzer und Vernetzungshilfsmittel vorzugsweise 50 Gew.-% bis 95 Gew.-%, besonders bevorzugt 65 Gew.-% bis 85 Gew.-% bezogen auf das Gesamtgewicht des fertigen Masterbatches.

Die erfindungsgemäßen vulkanisierbaren Zusammensetzungen enthalten vorzugsweise auch noch ein oder mehrere Füllstoffe wie Ruß, Aluminiumhydroxid, Magnesiumhydroxid, Talkum, Silica, Calciumcarbonat und Kaolin (calcinierte) Aluminiumsilikate, vorzugsweise Ruß, Silica, calcinierte Aluminiumsilikate, Aluminiumhydroxid und/oder calciniertes Kaolin.

Die sonstigen Additive umfassen Füllstoffaktivatoren, Lichtschutzmittel, Treibmittel, Farbstoffe, Pigmente, Wachse, Harze, sowie weitere oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als Füllstoffmodifikatoren kommen z.B. organische Silane, wie Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrhmethoxysilan, (Octadecyl)methyl-dimethoxysilan und epoxygruppenhaltige Silane, wie z.B. 3-Glycidoxypropyltrimethoxysilan oder 3-Glycidoxypropyltriethoxysilan, in Betracht. Weitere Füllstoffaktivatoren stellen zum Beispiel grenzflächenaktive Substanzen wie Triethanolamin, Trimethylolpropan, Hexantriol und Polyethylenglycole mit Molekulargewichten von 74 bis 10 000 g/mol dar. Besonders bei Füllstoffen wie Aluminiumtrihydroxiden die in nicht-modifizierter Form die Vernetzung stören oder verhindern würden, werden besonders bevorzugt derartige Modifikatoren verwendet. Die Menge an Füllstoffmodifikatoren beträgt üblicherweise 0 bis 10 Gew.-Teile, bezogen auf 100 Gew.-Teile des Epoxidgruppen-haltigen Ethylen-Vinylacetat-Terpolymerisats.

Als **Antioxidantien** können den vulkanisierbaren Zusammensetzungen alle dem Fachmann bekannten zugesetzt werden, die üblicherweise in Mengen von 0 bis 5 Gew.-Teile, bevorzugt 0,5 bis 3 Gew.-Teile, bezogen auf 100 Gew.-Teile des epoxidgruppen-haltigen Ethylen-Vinylacetat-Copolymeren eingesetzt werden. Bevorzugt werden CDPA und TMQ eingesetzt.

Als **Verarbeitungshilfsmittel** und/oder **Formtrennmittel** kommen z.B. gesättigte oder teilweise ungesättigte Fett- und Ölsäuren und deren Derivate (Fettsäureester, Fettsäuresalze, Fettalkohole, Fettsäureamide) in Betracht. Außerdem können Ozonschutzwachse, z.B. Antilux, in geringen Dosierungen als Verarbeitungshilfsmittel eingesetzt werden. Diese Mittel werden in Mengen von 0 bis 10 Gew.-Teile, bevorzugt 0 bis 2 Gew.-Teile, besonders bevorzugt 0 bis 1 Teil bezogen auf 100 Gew.-Teile des epoxidgruppen-haltigen Ethylen-Vinylacetat-Copolymerisats eingesetzt. Verglichen mit Compounds enthaltend herkömmliche Ethylen-Vinylacetat-Copolymere ist die Klebrigkeit der auf den erfindungsgemäßen epoxygruppenhaltigen Ethylen-Vinylacetat-Copolymeren basierenden Compounds deutlich geringer, daher sind normalerweise wesentlich geringere Dosierungen nötig. Häufig kann auch völlig auf Verarbeitungshilfsmittel verzichtet werden. Zur weiteren Verbesserung der Entformbarkeit können zudem auf die Formoberfläche applizierbare Produkte, wie z.B. Produkte auf Basis von niedermolekularen Silikonverbindungen, Produkte auf Basis von Fluorpolymeren sowie Produkte auf Basis von Phenolharzen eingesetzt werden. Als Treibmittel kann z.B. OBSH oder ADC eingesetzt werden.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukte.

Die Vulkanisation der erfindungsgemäßen epoxygruppenhaltigen Copolymer bzw. der diese enthaltenden vulkanisierbaren Zusammensetzungen erfolgt typischerweise bei einer Temperatur im Bereich von 100 bis 250°C, vorzugsweise 140 bis 220 °C, besonders bevorzugt von 160 bis 200 °C. Bei Bedarf kann im Anschluss an die Vulkanisation eine Temperung bei einer Temperatur von etwa 150 bis 200°C während 1 bis 24 Stunden durchgeführt werden um die Endprodukteigenschaften zu verbessern.

Gegenstand der Erfindung sind auch die durch besagte Vulkanisation erhältlichen Vulkanisate. Diese zeigen sehr gute Werte im Druckverformungstest bei Raumtemperatur und 150°C, hohe Zugspannungen und gute Bruchdehnungen.

Die erfindungsgemäßen Vulkanisate weisen typischerweise eine Bruchdehnung bei RT von mindesten 150 %, bevorzugt mindestens 160 %, besonders bevorzugt mindestens 170 % und besonders bevorzugt mindestens 180 % auf.

Die erfindungsgemäßen Vulkanisate weisen vorzugsweise einen Druckverformungsrest DVR DIN ISO 815 168h/150 °C von maximal 60 %, bevorzugt maximal 50 % und besonders bevorzugt maximal 40 % auf.

Ein weiterer Gegenstand der Erfindung ist die Verwendung der erfindungsgemäßen vulkanisierbaren Zusammensetzungen zur Herstellung von Vulkanisaten, und von Formkörpern enthaltend solche Vulkanisate, vorzugsweise Formkörpern ausgewählt aus Dichtungen, Isolierungen, Kabelmänteln, Kabelleitlagen, Schläuchen, Schalldämmmaterialien und geschäumten Formkörper, z.B. Schall- und Wärmedämmschäumen, insbesondere Schäumen, die an der Luft vulkanisiert werden.

**Beispiele:**

Messmethoden:

Die Bestimmung der Glasübergangstemperatur, sowie deren sogenannte Onset- und Offsetpunkte erfolgt mittels dynamischer Differenzkalorimetrie (engl.: *Differential Scanning Calorimetry*- DSC) nach ASTM E 1356-03 bzw. nach DIN 11357-2. Heizrate ist 20K/min.

Die Bestimmung des Monomergehaltes der Copolymere erfolgte mittels 1 H NMR (Gerät: Bruker DPX400 mit Software XWIN-NMR 3.1, Messfrequenz 400 MHz).

Die Bestimmung der Werte für die Mooney-Viskosität (ML (1+4)100°C) erfolgt jeweils mittels eines Scherscheibenviskosimeters ISO 289 bei 100°C.

Der Vulkanisationsverlauf im MDR (Moving Die Rheometer) und dessen analytischen Daten wurden an einem Monsanto-Rheometer MDR 2000 nach ASTM D5289-95 gemessen.

Die Platten für die Bestimmung der mechanischen Eigenschaften wurden in einer Vulkanisierpresse der Firma Werner & Pfleiderer zwischen Teflon-Folien unter den angegebenen Bedingungen vernetzt/vulkanisiert.

Der Druckverformungsrest ("DVR") (engl.: *Compression Set*) bei der angegebenen Temperatur wurde nach DIN ISO 815 gemessen.

Die Härte nach Shore A wurde nach ASTM-D2240-81 gemessen.

Die Zugversuche zur Bestimmung der Spannung in Abhängigkeit von der Deformation wurden nach DIN 53504 bzw. ASTM D412-80 durchgeführt.

Der Weiterreißwiderstand wurde nach DIN 53515 am Graves-Probenkörper bei Raumtemperatur gemessen.

Die Tear Analyser-Messungen erfolgten in Luft bei einer Temperatur von 120 °C mit einem Tear Analyser der Firma Coesfeld. Verwendet wurden streifenförmige Proben mit einer Breite von 15 mm, einer Dicke von etwa 1,5 mm und einer freien Einspannlänge von 65 mm. Die Proben wurden mit einem Rasiermesser mit einer 1 mm tiefen Kerbe versehen. Für jeden Teststreifen wurde die genaue Probendicke mit einem Dickenmesser bestimmt. Die Proben wurden mit einer Pulswiederholrate von 4 Hz uniaxial gedehnt. Dies entspricht einer Periodendauer von 0,25 Sekunden. Der Puls mit einer Amplitude von 2,5 bis 6,5 % Dehnung wurde mit einem Sinus mit einer Frequenz von 30 Hz moduliert. Das Ende der Lebensdauer ist erreicht, wenn die Risstiefe 10 mm beträgt.

Die Heißluftalterung erfolgte nach DIN 53508 / 2000. Es wurde das Verfahren 4.1.1 "Lagerung im Wärmeschrank mit zwangsläufiger Durchlüftung" angewandt.

Die Öllagerung erfolgte nach DIN ISO 1817.

Die in den nachfolgenden Tabellen angegebenen Abkürzungen haben folgende Bedeutungen:

| | |
|---|---|
| "RT" | Raumtemperatur (23 ± 2 °C) |
| "TS" | Tensile strength (engl.), Zugspannung, gemessen bei RT |
| "EB" | Elongation at break (engl.), Bruchdehnung, gemessen bei RT |
| "M50" Modul bei 50% | Dehnung, gemessen bei RT |
| "M100"Modul bei 100% | Dehnung, gemessen bei RT |
| "M300"Modul bei 300% | Dehnung, gemessen bei RT |
| "S max" | ist das maximale Drehmoment der Vernetzungsisotherme |

| | |
|---|---|
| "$t_{10}$" | Dauer bis zum Erreichen von 10 % von S max |
| "$t_{80}$" | Dauer bis zum Erreichen von 80 % von S max |
| "$t_{90}$" | Dauer bis zum Erreichen von 90% von S max |

**Mit Handelsnamen bezeichnete Substanzen:**

| | |
|---|---|
| Levapren® 600 | Ethylen-Vinylacetat-Copolymer (VA-Gehalt 60%) der Lanxess Deutschland GmbH |
| Sterling® 142 | Ruß (Handelsprodukt der Cabot Corp.) |
| Rhenogran CaO-80 | Feuchtigkeitsabsorber der Rheinchemie Rheinau GmbH |
| Tetrabutylammoniumbromid | (TBAB) Handelsprodukt der Sigma-Aldrich Chemie GmbH |
| Luvomaxx® CDPA | Alterungsschutzmittel der Lehmann und Voss & Co. KG |
| TAIC | Triallylisocyanurat 100 %, der Kettlitz GmbH |
| Uniplex DOS, Uniplex 546 | Weichmacher der Unitex Chemical Corp. |
| Edenor C18 | Stearinsäure der Oleo Solutions Ltd |
| Perkadox 14-40 B-PD | Di-(tert-butylperoxyisopropyl)benzol der AkzoNobel N.V. |
| Corax® N550/30 | Ruß (Handelsprodukt der Orion Engineered Carbons GmbH) |
| Aflux 18 | Verarbeitungshilfsmittel der Rhein Chemie Rheinau GmbH |
| Stabaxol P | Polycarbodümid der der Rhein Chemie Rheinau GmbH |
| Maglite DE | Magnesiumoxid der The HallStar Company |
| Vulkanox HS/LG | Alterungsschutzmittel der Lanxess Deutschland GmbH |
| Glutarsäure (technisch) | Handelsprodukt der Lanxess Deutschland GmbH |

**1.1 Herstellung von epoxygruppenhaltigen Ethylen-Vinylacetat-Copolymers**

**Beispiel 1 (T1):**

Die Herstellung erfolgte in einem 5L Rührautoklaven. Hierzu wurden 1978 g einer Lösung bestehend aus 691,0 g *t*-Butanol, 1285,0 g Vinylacetat, 2,0 g Glycidylmethacrylat und 252,5 g einer Aktivatorlösung bestehend aus 2,50 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1059 g Ethylen aufgedrückt. Die Temperatur wurde auf 61 °C erhöht, wobei sich ein Druck von ca. 380 bar einstellt. Nach einer halben Stunde, wobei der Umsatz bei ca. 10 Gew.-%, bezogen auf das Vinylacetat, lag, wurde eine Lösung bestehend aus 122,2 g *t*-Butanol, 156,3 g Vinylacetat und 27,5 g Glycidylmethacrylat mit einer Geschwindigkeit 0,6 g/min zur Reaktionsmischung dosiert. Während der ganzen Reaktion wurde der Druck durch Aufdrücken von Ethylen bei ca. 380 bar gehalten. Nach einer Reaktionszeit von 10h wurde die Ethylendosierung beendet und die Polymerlösung wurde aus dem 5 L Reaktor in einen Abstoppautoklav gedrückt. Nach Entfernung des Lösungsmittels und der Restmonomere erhielt man 1586 g Glycidylmethacrylat-Ethylen-Vinylacetat-Copolymer mit einem Restgehalt an Glycidylmethacrylat kleiner 100 mg/kg.

**Beispiel 2 (T2):**

In einer 5-Kesselkaskade mit 30 L Reaktorvolumen wurde der erste Kessel mit 0,00325 kg/h Glycidylmethacrylat, 0,83 kg/h Ethen, 1,50 kg/h einer 60 %igen Vinylacetatlösung in *t*-Butanol und 0,080 kg/h einer ADVN- Initiatorlösung (Zusammensetzung 0,7% ADVN, 59,6% Vinylacetat, 39,6% t-Butanol) bei 60 °C beschickt. In den Kesseln 2,3,4,5 wurden 0,043 kg/h einer Glycidylmethacrylatlösung (Zusammensetzung: 37% t-BuOH, 55,5% Vinylacetat, 7,5 % Glycidylmethacrylat) zudosiert. Der Druck lag bei ca. 380 bar über der ganzen Kesselkaskade. Das Verfahren lieferte 0,75 kg/h Glycidylmethacrylat-Ethylen-Vinylacetat-Copolymer mit einem Restgehalt an (monomerem) Glycidylmethacrylat kleiner 100 mg/kg.

**Beispiel 3 (T3):**

Die Herstellung erfolgte in einem 5 L Rührautoklaven. Hierzu wurden 1983 g einer Lösung bestehend aus 693,0 g *t*-Butanol, 1288,0 g Vinylacetat, 2,0 g Glycidylmethacrylat und 252,5 g einer Aktivatorlösung bestehend aus 2,50 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1062 g Ethylen aufgedrückt. Die Temperatur wurde auf 61 °C erhöht, wobei sich ein Druck von ca. 380 bar einstellt. Nach einer halben Stunde wurde eine Lösung bestehend aus 122,2 g *t*-Butanol, 151,8 g Vinylacetat und 32,0 g Glycidylmethacrylat mit einer Geschwindigkeit 0,68 g/min zur Reaktionsmischung dosiert. Während der ganzen Reaktion wurde der Druck bei ca. 380 bar durch Aufdrücken von Ethylen gehalten.

Nach einer Reaktionszeit von 7,5 h wurde die Temperatur vorsichtig innerhalb von 30 Minuten auf 70 °C erhöht, und es wurde bei der Temperatur eine weitere Stunde polymerisiert. Anschließend wurde die Ethylendosierung beendet und die Polymerlösung wurde langsam aus dem 5 L Reaktor in einen Abstoppautoklav gedrückt. Nach Entfernung des Lösungsmittels und der Restmonomere erhielt man 1407 g Glycidylmethacrylat-Ethylen-Vinylacetat-Copolymer mit einem Restgehalt an (monomerem) Glycidylmethacrylat kleiner 100 mg/kg.

**Beispiel 4 (T4):**

Die Herstellung erfolgte in einem 5 L Rührautoklaven. Hierzu wurden 1983 g einer Lösung bestehend aus 693,0 g *t*-Butanol, 1288,0 g Vinylacetat, 2,0 g Glycidylmethacrylat und 252,5 g einer Aktivatorlösung bestehend aus 2,50 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1062 g Ethylen aufgedrückt. Die Temperatur wurde auf 61 °C erhöht, wobei sich ein Druck von ca. 380 bar einstellt. Nach einer halben Stunde wurde eine Lösung bestehend aus 122,2 g *t*-Butanol, 147,8 g Vinylacetat und 36,0 g Glycidylmethacrylat mit einer Geschwindigkeit 0,68 g/min zur Reaktionsmischung dosiert. Während der ganzen Reaktion wurde der Druck durch Aufdrücken von Ethylen bei ca. 380 bar gehalten.

Nach einer Reaktionszeit von 7,5 h wurde die Temperatur vorsichtig innerhalb von 30 Minuten auf 70 °C erhöht und es wurde bei der Temperatur eine weitere Stunde polymerisiert. Anschließend wurde die Ethylendosierung gestoppt und die Polymerlösung wurde langsam aus dem 5 L Reaktor in einen Abstoppautoklav gedrückt. Nach Entfernung des Lösungsmittels und der Restmonomere erhielt man 1345 g Glycidylmethacrylat-Ethylen-Vinylacetat-Copolymers mit einem Restgehalt an (monomerem) Glycidylmethacrylat kleiner 100 mg/kg.

**Beispiel 5 (T5):**

Die Herstellung erfolgte in einem 5 L Rührautoklaven. Hierzu wurden 1983 g einer Lösung bestehend aus 693,0 g *t*-Butanol, 1288,0 g Vinylacetat, 3,0 g Glycidylmethacrylat und 252,5 g einer Aktivatorlösung bestehend aus 2,50 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1062 g Ethylen aufgedrückt. Die Temperatur wurde auf 61 °C erhöht, wobei sich ein Druck von ca. 380 bar einstellt. Nach einer halben Stunde wurde eine Lösung bestehend aus 122,2 g *t*-Butanol, 131,8 g Vinylacetat und 52,0 g Glycidylmethacrylat mit einer Geschwindigkeit 0,68 g/min zur Reaktionsmischung dosiert. Während der ganzen Reaktion wurde der Druck durch Aufdrücken von Ethylen bei ca. 380 bar gehalten.

Nach einer Reaktionszeit von 7,5 h wurde die Temperatur vorsichtig innerhalb von 30 Minuten auf 70 °C erhöht und es wurde bei der Temperatur eine weitere Stunde polymerisiert. Anschließend wurde die Ethylendosierung gestoppt und die Polymerlösung wurde langsam aus dem 5 L Reaktor in einen Abstoppautoklav gedrückt. Nach Entfernung des Lösungsmittels und der Restmonomere erhielt man 1081 g Glycidylmethacrylat-Ethylen-Vinylacetat- mit einem Restgehalt an (monomerem) Glycidylmethacrylat kleiner 100 mg/kg.

**Beispiel 6 (T6):**

Die Herstellung erfolgte in einem 5 L Rührautoklaven. Hierzu wurden 1985 g einer Lösung bestehend aus 693,0 g *t*-Butanol, 1288,0 g Vinylacetat, 4,0 g Glycidylmethacrylat und 252,5 g einer Aktivatorlösung bestehend aus

2,50 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend 1062 g Ethylen aufgedrückt. Die Temperatur wurde auf 61 °C erhöht, wobei sich ein Druck von ca. 380 bar einstellt. Nach einer halben Stunde, als der Umsatz bei ca. 10 Gew.-%, bezogen auf das Vinylacetat, lag, wurde eine Lösung bestehend aus 122,2 g *t*-Butanol, 107,8 g Vinylacetat und 76,0 g Glycidylmethacrylat mit einer Geschwindigkeit 0,6 g/min zur Reaktionsmischung dosiert. Während der ganzen Reaktion wurde der Druck durch Aufdrücken von Ethylen bei ca. 380 bar gehalten.

Nach einer Reaktionszeit von 10 h wurde die Ethylendosierung gestoppt und die Polymerlösung wurde langsam aus dem 5 L Reaktor in einen Abstoppautoklav gedrückt. Nach Entfernung des Lösungsmittels und der Restmonomere erhielt man 1105 g mit einem Restgehalt an (monomerem) Glycidylmethacrylat kleiner 100 mg/kg.

**Beispiel 7 (T7):**

Die Herstellung erfolgte in einem 5 L Rührautoklaven. Hierzu wurden 2822 g einer Lösung bestehend aus 874 g *t*-Butanol, 1946 g Vinylacetat, 2,0 g Glycidylmethacrylat und 251,2 g einer Aktivatorlösung bestehend aus 1,20 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 696 g Ethylen aufgedrückt. Die Temperatur wurde auf 61 °C erhöht, wobei sich ein Druck von ca. 380 bar einstellt. Nach einer halben Stunde, wobei der Umsatz bei ca. 10 Gew.-%, bezogen auf das Vinylacetat, lag, wurde eine Lösung bestehend aus 157,5 g *t*-Butanol, 251,2 g Vinylacetat und 41,0 g Glycidylmethacrylat mit einer Geschwindigkeit 0,88 g/min zur Reaktionsmischung dosiert (ca. 8,5 h). Während der ganzen Reaktion wurde der Druck durch Aufdrücken von Ethylen bei ca. 380 bar gehalten.

Nach einer Reaktionszeit von 10 h wurde die Ethylendosierung gestoppt und die Polymerlösung wurde langsam aus dem 5 L Reaktor in einen Abstoppautoklav gedrückt. Nach Entfernung des Lösungsmittels und der Restmonomere erhielt man 1762 g Glycidylmethacrylat-Ethylen-Vinylacetat-Copolymerisat mit einem Restgehalt an (monomerem) Glycidylmethacrylat kleiner 100 mg/kg.

**Beispiel 8 (T8):**

Die Herstellung erfolgte in einem 5 L Rührautoklaven. Hierzu wurden 1560,5 g einer Lösung bestehend aus 882 g *t*-Butanol, 677 g Vinylacetat, 1,5 g Glycidylmethacrylat und 252,5 g einer Aktivatorlösung bestehend aus 1,49 g ADVN, 0,99 g AIBN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1240 g Ethylen aufgedrückt. Die Temperatur wurde auf 62 °C erhöht, wobei sich ein Druck von ca. 380 bar einstellt. Nach einer halben Stunde, als der Umsatz bei ca. 10 Gew.-%, bezogen auf das Vinylacetat, lag, wurde eine Lösung bestehend aus 228 *g t*-Butanol, 127,0 g Vinylacetat und 25,0 g Glycidylmethacrylat mit einer Geschwindigkeit 0,75 g/min zur Reaktionsmischung dosiert (ca. 8,5 h). Während der ganzen Reaktion wurde der Druck durch Aufdrücken von Ethylen bei ca. 380 bar gehalten.

Nach 1,5 h wurde die Temperatur auf 65 °C erhöht. Nach weiteren 1,5 h wurde die Temperatur auf 70 °C angehoben und nach 5,5 h die Polymerisationstemperatur auf 80 °C zu erhöhen. Nach einer Gesamtreaktionszeit von 10h wurde die Ethylendosierung gestoppt und die Polymerlösung wurde langsam aus dem 5 L Reaktor in einen Abstoppautoklav gedrückt. Nach Entfernung des Lösungsmittels und der Restmonomere erhielt man 1278 g Glycidylmethacrylat-Ethylen-Vinylacetat-Copolymerisat mit einem Restgehalt an (monomerem) Glycidylmethacrylat kleiner 100 mg/kg.

**Beispiel 9 (T9)**

Die Herstellung des epoxyhaltigen Ethylen-Vinylacetat-Terpolymerisats erfolgte in einem 5 L Rührautoklaven. Hierzu wurden 1984 g einer Lösung bestehend aus 693,0 g tert-Butanol, 1288,0 g Vinylacetat, 3,0 g Glycidylmethacrylat und 252,5 g einer Aktivatorlösung bestehend aus 2,50 g 2,2'-Azobis(2,4-dimethylvaleronitril) und 250,0 g Vinylacetat-tert-Butanol Lösung (Vinylacetat 20%) nacheinander bei RT in den 5 L Reaktor eingezogen. Der Reaktor wurde mit Stickstoff beaufschlagt und anschließend wurden 1062 g Ethylen aufgedrückt. Die Temperatur wurde auf 61 °C erhöht, wobei sich ein Druck von ca. 380 bar einstellt. Nach einer halben Stunde wurde eine Lösung bestehend aus 122,2 g tert-Butanol, 134,8 g Vinylacetat und 49,0 g Glycidylmethacrylat mit einer Geschwindigkeit 0,68 g/min zur Reaktionsmischung dosiert. Während der ganzen Reaktion wurde der Druck bei ca. 380 bar durch Aufdrücken von Ethylen gehalten.

Nach einer Reaktionszeit von 9 h wurde die Ethylendosierung beendet und die Polymerlösung wurde aus dem 5 L Reaktor in einen Abstoppautoklav, der mit 800 g Aceton befüllt war, gedrückt. Nach langsamem Entspannen wurde die Polymerlösung abgelassen, und Lösungsmittel und Restmonomere im Vakuum (75 °C, 50 mbar, Trocknung bis zur Gewichtskonstanz) entfernt. Man erhielt 1586 g Glycidylmethacrylat-Ethylen-Vinylacetat-Terpolymerisat mit einem Restgehalt an (monomerem) Glycidylmethacrylat kleiner 100 mg/kg.

**Beispiel 10 (T10)**

Die Herstellung erfolgte analog zu Beispiel 2, abgesehen davon, dass der erste Kessel mit 0,0032 kg/h Glycidylmethacrylat und die Kessel 2,3,4,5 mit 0,041 kg/h Glycidylmethacrylatlösung (Zusammensetzung: 37 % t-BuOH, 55,5 % Vinylacetat, 7,5 % Glycidylmethacrylat) beschickt wurden. Dabei wurden 0,76 kg/h eines Glycidylmethacrylat-Ethylen-Vinylacetat-Terpolymerisats mit einem Restgehalt an (monomerem) GMA von <100 mg/kg erhalten.

**Vergleichsbeispiel 2 (VT2):**

Die Herstellung erfolgte in einem 5 L Rührautoklaven. Hierzu wurden 2015 g einer Lösung bestehend aus 693,0 g *t*-Butanol, 1288,0 g Vinylacetat, 34,0 g Glycidylmethacrylat und 252,5 g einer Aktivatorlösung bestehend aus 2,50 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1062 g Ethylen aufgedrückt. Die Temperatur wurde auf 61 °C erhöht, wobei sich ein Druck von ca. 380 bar einstellt. Es wurde 10 h bei ca. 380 bar polymerisiert. Die Druckeinstellung erfolgte durch Zudosierung von Ethen und einer Vinylacetat/*t*-Butanollösung (60% Vinylacetat), dabei wurde eine Ethen / Lösungsverhältnis von 1:2 eingehalten.

Nach einer Reaktionszeit von 10 h wurde die Zudosierung gestoppt und die Polymerlösung wurde langsam aus dem 5 L Reaktor in einen Abstoppautoklav gedrückt. Nach Entfernung des Lösungsmittels und der Restmonomere erhielt man 1570 g Glycidylmethacrylat-Ethylen-Vinylacetat-Copolymer mit einem Restgehalt an (monomerem) Glycidylmethacrylat kleiner 100 mg/kg.

**Vergleichsbeispiel 6 (VT6):**

Die Herstellung erfolgte in einem 5 L Rührautoklaven. Hierzu wurden 2061 g einer Lösung bestehend aus 693,0 g *t*-Butanol, 1288,0 g Vinylacetat, 80,0 g Glycidylmethacrylat und 252,5 g einer Aktivatorlösung bestehend aus 2,50 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1062 g Ethylen aufgedrückt. Die Temperatur wurde auf 61 °C erhöht, wobei sich ein Druck von ca. 380 bar einstellt. Es wurde 10 h bei ca. 380 bar polymerisiert. Die Druckeinstellung erfolgte durch Zudosierung von Ethylen und einer Vinylacetat/*t*-Butanollösung (60%ig an Vinylacetat), dabei wurde eine Ethylen / Lösungsverhältnis von 1:2 eingehalten.

Nach einer Reaktionszeit von 10 h wurde die Zudosierung gestoppt und die Polymerlösung wurde langsam aus dem 5 L Reaktor in einen Abstoppautoklav gedrückt. Nach Entfernung des Lösungsmittels und der Restmonomere erhielt man 1199 g Glycidylmethacrylat-Ethylen-Vinylacetat-Copolymer mit einem Restgehalt an (monomerem) Glycidylmethacrylat kleiner 100 mg/kg.

**Vergleichsbeispiel 7 (VT7):**

Die Herstellung erfolgte in einem 5 L Rührautoklaven. Hierzu wurden 2794,0 g einer Lösung bestehend aus 850,0 g *t*-Butanol, 1900,0 g Vinylacetat, 44,0 g Glycidylmethacrylat und 251,2 g einer Aktivatorlösung bestehend aus 1,2 g ADVN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 680 g Ethylen aufgedrückt. Die Temperatur wurde auf 61 °C erhöht, wobei sich ein Druck von ca. 380 bar einstellt. Es wurde 10 h bei ca. 380 bar polymerisiert. Die Druckeinstellung erfolgte durch Zudosierung von Ethylen und einer Vinylacetat/*t*-Butanollösung (60% Vinylacetat), dabei wurde eine Ethylen / Lösungsverhältnis von 1 : 4,11 eingehalten.

Nach einer Reaktionszeit von 10 h wurde die Zudosierung gestoppt und die Polymerlösung wurde langsam aus dem 5 L Reaktor in einen Abstoppautoklav gedrückt. Nach Entfernung des Lösungsmittels und der Restmonomere erhielt man 1840,2 g Glycidylmethacrylat-Ethylen-Vinylacetat-Copolymer mit einem Restgehalt an (monomerem) Glycidylmethacrylat kleiner 100 mg/kg.

**Vergleichsbeispiel 8 (VT8):**

Die Herstellung erfolgte in einem 5 L Rührautoklaven. Hierzu wurden 1585,5 g einer Lösung bestehend aus 882,0 g *t*-Butanol, 677 g Vinylacetat, 26,5 g Glycidylmethacrylat und 251,48 g einer Aktivatorlösung bestehend aus 1,49 g ADVN, 0,99 g AIBN und 250,0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1240 g Ethylen aufgedrückt. Die Temperatur wurde auf 62 °C erhöht, wobei sich ein Druck von ca. 380 bar einstellt. Die Druckeinstellung erfolgte durch Zudosierung von Ethylen und einer Vinylacetat/*t*-Butanollösung (40% Vinylacetat), dabei wurde eine Ethylen / Lösungsverhältnis von 1 : 1,45 eingehalten.

Nach 1,5 h wurde die Temperatur auf 65 °C erhöht. Nach weiteren 1,5 h wurde die Temperatur auf 70 °C angehoben und nach 5,5 h auf 80 °C erhöht. Nach einer Gesamtreaktionszeit von 10h wurde die Ethylenzudosierung gestoppt und die Polymerlösung wurde langsam aus dem 5 L Reaktor in einen Abstoppautoklav gedrückt.

Nach Entfernung des Lösungsmittels und der Restmonomere erhielt man 1103 g (monomerem) Glycidylmethacrylat-Ethylen-Vinylacetat-Copolymerisat mit einem Restgehalt an Glycidylmethacrylat kleiner 100 mg/kg.

Tabelle 1: Zusammenfassung der Ergebnisse

| Bsp. | Mn [g/mol] | Mw [g/mol] | Mz [g/mol] | ML(1+4@ 100°C) [MU] | Tg [°C] | Ausbeute [g] | GMA [Gew.-%] | VA/ [Gew.-%] |
|---|---|---|---|---|---|---|---|---|
| T1 | 78528 | 275316 | 657481 | 32,4 | -25 | 1586 | 1,8 | 55,8 |
| T2 | 67385 | 219033 | 567337 | 23 | -24 | 750g/h | 2,1 | 58,3 |
| T3 | 60846 | 212855 | 502514 | 23,6 | -25 | 1407 | 2,3 | 56,6 |
| T4 | 56432 | 173900 | 434261 | 17,1 | -24 | 1345 | 2,8 | 56,9 |
| T5 | 47730 | 124567 | 250089 | 17,0 | -24 | 1081 | 4,7 | 56,3 |
| T6 | 55024 | 148717 | 320262 | 16,1 | -22 | 1105 | 6,9 | 54,9 |
| T7 | 72154 | 221050 | 484881 | 24,2 | -6 | 1762 | 2,1 | 73,2 |
| T8 | 64376 | 255711 | 640281 | 33,5 | -28 | 1278 | 2,0 | 40,0 |
| T9 | 59242 | 188962 | 432932 | 21,6 | -25 | 1586 | 3,6 | 56,6 |
| T10 | 68665 | 226004 | 595841 | 22,8 | -25 | 760g/h | 1,9 | 58,6 |
| VT2 | 63741 | 213822 | 492939 | 24,3 | -24 | 1570 | 2,1 | 57,8 |
| VT6 | 57707 | 178206 | 434950 | 20,9 | -24 | 1199 | 6,4 | 56,3 |
| VT7 | 75789 | 229324 | 511611 | 29,1 | -6 | 1840 | 2,4 | 74,0 |
| VT8 | 57228 | 187045 | 418537 | 24,4 | -29 | 1103 | 2,4 | 39,4 |

## 2. Vulkanisierbare Mischungen und Vulkanisate

Zu jeweils 100 Teilen des verwendeten Glycidylmethacrylat-Ethylen-Vinylacetat-Copolymerisats wurden die in Tabelle 2 angegebenen Komponenten zugegeben und durch Mischung auf der Walze für 10 Minuten vulkanisierbare Zusammensetzungen hergestellt.

Tabelle 2: Zusammensetzung der vulkanisierbaren Mischung

| Vulkanisierbare Mischung | M2a | M3a | M4a | M5a | M6a | VM2a |
|---|---|---|---|---|---|---|
| Verwendetes Copolymer | T2 | T3 | T4 | T5 | T6 | VT2 |
| GMA-Gehalt des Copolymers (Gew.-% ) | 2,1 | 2,3 | 2,8 | 4,7 | 6,9 | 2,1 |
| Corax (Teile) | 50 | 50 | 50 | 50 | 50 | 50 |
| Luvomaxx CDPA (Teile) | 1,5 | 1,5 | 1,5 | 1,5 | 1,5 | 1,5 |
| Glutarsäure (Teile) | 0,98 | 1,07 | 1,3 | 2,18 | 3,21 | 0,98 |
| Tetrabutylammoniumbromid (Teile) | 1,36 | 1,49 | 1,81 | 3,05 | 4,47 | 1,36 |

Der Vulkanisationsverlauf der Mischungen wurde im Moving Die Rheometer bei 180 °C/30 Minuten bestimmt. Die Ergebnisse sind in Tabelle 3 aufgeführt.

Tabelle 3: Vulkanisationsverlauf im MDR (180°C/30 Minuten)

| Vulkanisierbare Mischung | M2a | M3a | M4a | M5a | M6a | VM2a |
|---|---|---|---|---|---|---|
| S min (dNm) | 0,77 | 0,78 | 0,64 | 0,47 | 0,83 | 1,14 |

(fortgesetzt)

| Vulkanisierbare Mischung | M2a | M3a | M4a | M5a | M6a | VM2a |
|---|---|---|---|---|---|---|
| S max (dNm) | 12,77 | 15,12 | 17,98 | 26,27 | 41,35 | 4,23 |
| $t_{10}$ (sec) | 50 | 56 | 48 | 35 | 31 | 19 |
| $T_{80}$ (sec) | 153 | 152 | 125 | 91 | 74 | 234 |
| $T_{90}$ (sec) | 197 | 192 | 152 | 112 | 91 | 435 |

Es zeigte sich, dass das Vernetzungsniveau S max (dNm) von Zusammensetzungen enthaltend Copolymere bei denen während der Polymerisation GMA zugegeben wurde (M2-M6) deutlich besser ist als bei Zusammensetzungen enthaltend Copolymere bei denen alles GMA zu Beginn der Polymerisation zugegeben wurde.

Tabelle 4: Vulkanisateigenschaften

| Vulkanisat | | M2a | M3a | M4a | M5a | M6a | VM2a |
|---|---|---|---|---|---|---|---|
| Vukanisationszeit (min in der Presse bei 180 °C) | | 12 | 12 | 12 | 12 | 12 | 12 |
| TS | MPa | 16,10 | 15,50 | 15,60 | 13,6 | 15,30 | 1,8 |
| EB | % | 447,0 | 390,0 | 352,0 | 182,0 | 131,0 | 632 |
| M50 | MPa | 2,10 | 2,00 | 2,40 | 3,8 | 5,20 | 1,4 |
| M100 | MPa | 4,40 | 4,50 | 5,30 | 8,5 | 12,40 | 1,6 |
| M300 | MPa | 12,30 | 12,90 | 13,90 | - | - | 1,7 |
| Härte | Shore A | 69 | 67 | 69 | 76 | 78 | 61 |
| DVR (168h/150 °C) | % | 40 | 32 | 33 | 28 | 25 | 97 |

Die erfindungsgemäßen Mischungen führten zu sehr vorteilhaften Vulkanisateigenschaften in Bezug auf Bruchdehnung, Zugfestigkeit, Härte und Druckverformungsrest (DVR).

Vernetzung ungefüllter vulkanisierbarer Zusammensetzungen

Zu jeweils 100 Teilen des verwendeten Glycidylmethacrylat-Ethylen-Vinylacetat-Copolymeren wurden die in Tabelle 5 angegebenen Komponenten zugegeben und durch Mischung auf der Walze für 10 Minuten vulkanisierbare Zusammensetzungen hergestellt. Die Glutarsäure wurde dabei stöchiometrisch eingesetzt, d. h. in einem molaren Verhältnis (Glutarsäure zu Epoxygruppen des Copolymeren) von 1:2. Das molare Verhältnis von Epoxygruppen des Copolymeren zu Tetrabutylammoniumbromid betrug 3,5 : 1.

Tabelle 5: Ungefüllte Zusammensetzung für die Gelmessung

| | M2b | VM2b | M6b | VM6b | M7b | VM7b | M8b | VM8b |
|---|---|---|---|---|---|---|---|---|
| Verwendetes Copolymer | T2 | VT2 | T6 | VT6 | T7 | VT7 | T8 | VT8 |
| GMA Gehalt des Copolymerisats (Gew.-%) | 2,1 | 2,1 | 6,9 | 6,4 | 2,1 | 2,4 | 2,0 | 2,4 |
| Glutarsäure (Teile) | 0,98 | 0,98 | 3,21 | 2,97 | 0,98 | 1,12 | 0,93 | 1,12 |
| Tetrabutylammoniumbromid (Teile) | 1,36 | 1,36 | 4,47 | 4,15 | 1,36 | 1,56 | 1,30 | 1,56 |

Der Vulkanisationsverlauf der Mischungen wurde im Moving Die Rheometer bei 180 °C/30 Minuten bestimmt. Die Ergebnisse sind in Tabelle 6 aufgeführt.

Tabelle 6: Vulkanisationsverlauf ungefüllter Zusammensetzungen im MDR (180°C/30 Minuten)

| Vulkanisat | M2b | VM2b | M6b | VM6b | M7b | VM7b | M8b | VM8b |
|---|---|---|---|---|---|---|---|---|
| S min (dNm) | 0,13 | 0,15 | 0,14 | 0,22 | 0,11 | 0,09 | 0,21 | 0,20 |

(fortgesetzt)

| Vulkanisat | M2b | VM2b | M6b | VM6b | M7b | VM7b | M8b | VM8b |
|---|---|---|---|---|---|---|---|---|
| S max (dNm) | 3,6 | 0,49 | 11,88 | 0,60 | 5,06 | 0,45 | 4,43 | 0,63 |
| $t_{10}$ (sec) | 46 | - | 29 | - | 35 | - | 111 | - |
| $T_{80}$ (sec) | 144 | - | 93 | - | 72 | - | 317 | - |
| $T_{90}$ (sec) | 188 | - | 134 | - | 86 | - | 382 | - |

Die ungefüllten vulkanisierbaren Zusammensetzungen gemäß Tabelle 5 wurden jeweils bei 180 °C für 12 min vulkanisiert. Anschließend wurden der Gelgehalt der einzelnen Vulkanisate gemessen, wofür 0,2 g des Copoylmers in 20 ml Toluol durch Schütteln auf einem Schüttler für 24 h bei Raumtemperatur bestmöglich gelöst und die Lösung anschließend für 45 min bei 25 000 U/min, Radius 11 cm zentrifugiert wurde. Das überstehende Lösemittel wurde ohne Gelverlust entfernt. Das zurückbleibende Gel wurde bei 60 °C im Trockenschrank bis zur Gewichtskonstanz getrocknet und ausgewogen. Der Gelgehalt angegeben in Gew.-% errechnet sich aus:

$$\text{Gelgehalt} = (\text{Auswaage Gel/ Polymer Einwaage}) * 100\%$$

Tabelle 6: Gelgehalt der ungefüllten Compounds nach Vulkanisation bei 180 °C

| Vulkanisat | M2b | VM2b | M6b | VM6b | M7b | VM7b | M8b | VM8b |
|---|---|---|---|---|---|---|---|---|
| Gelgehalt (Gew.-%) | 90,7 | 19,9 | 97,1 | 34,0 | 96,9 | 30,9 | 93,3 | 23,7 |

Vergleich mit peroxidisch vernetztem EVM

Die Polymere wurden gemäß den in Tabelle 8 gezeigten Rezepturen in einem Innenmischer des Typs GK 1,5 E der Firma Harburg-Freudenberger hergestellt. Der Füllgrad betrug 70 %, die Temperatur 30 °C, die Drehzahl 40 Upm, der Stempeldruck 8 bar.

**Vergleichsbeispiel 10 (VT10):**

Polymer, Füllstoffe, Weichmacher und sonstige Bestandteile außer dem Peroxid wurden in den Mischer gefüllt, der Stempel geschlossen, dann 3 Minuten gemischt, dann der Stempel gelüftet und gefegt, dann der Stempel wieder geschlossen und beim Erreichen von 100°C Mischungstemperatur ausgeworfen

Das Perkadox 14-40 B-PD wurde danach auf der Walze bei 30 °C eingemischt.

**Beispiele 11 und 12 (T11 und T12):**

Polymer, Füllstoffe, Weichmacher und sonstige Bestandteile außer der Glutarsäure und dem TBAB wurden in den Mischer gefüllt, der Stempel geschlossen, dann 3 Minuten gemischt, dann der Stempel gelüftet und gefegt, die Glutarsäure und das TBAB wurden nach Erhöhung der Drehzahl auf 70 Um zugegeben und dann der Stempel wieder geschlossen und beim Erreichen von 115°C Mischungstemperatur ausgeworfen. Danach wurde die Mischung auf der Walze bei 30 °C abgekühlt.

Tabelle 8: Zusammensetzung der vulkanisierbaren Mischungen (alle Angaben in phr)

| Komponente | VT10 | T11 | T12 |
|---|---|---|---|
| Levapren 600 | 100 | | |
| Copolymer T10 (1,9 % GMA) | | 100 | |
| Copolymer T9 (3,6 % GMA) | | | 100 |
| Sterling 142 | 85 | 85 | 85 |
| Uniplex 546 | 7,5 | 7,5 | 7,5 |

(fortgesetzt)

| Komponente | VT10 | T11 | T12 |
|---|---|---|---|
| Uniplex DOS | 7,5 | 7,5 | 7,5 |
| Aflux 18 | 1,5 | | |
| Edenor C 18 98-100 | 2,0 | | |
| Rhenogran CaO-80 | 3,0 | | |
| Stabaxol P | 0,5 | | |
| Vulkanox HS/LG | 1,5 | | |
| Maglite DE | 2,0 | | |
| Antilux 110 | | 2 | 2 |
| Luvomaxx CDPA | | 1,5 | 1,5 |
| TAIC | 2,0 | | |
| Perkadox 14-40 B-PD | 6,0 | | |
| Glutarsäure technisch | | 0,88 | 1,67 |
| Tetrabutylammoniumbromid | | 1,23 | 2,33 |
| Total | 218,50 | 205,61 | 207,50 |

Die Eigenschaften der vulkanisierbaren Mischungen (ohne vorherige Temperung gemessen) sind in Tabelle 9 dargestellt:

Tabelle 9: Eigenschaften der vulkanisierbaren Mischungen

| | VT10 | T11 | T12 |
|---|---|---|---|
| Mooney-Viskosität ML(1+4)100'C (ME) | 45 | 47 | 42 |
| S' min (dNm) | 0,75 | 1,05 | 1,07 |
| S' max (dNm) | 26,11 | 13,60 | 27,11 |
| t90 (min) | 5,98 | 4,22 | 2,40 |
| Vulkanisationszeit (min, in der Presse bei 180 °C) | 12 | 6 | 6 |

Die Eigenschaften der erhaltenen Vulkanisate sind in Tabelle 10 dargestellt:

Tabelle 10: Vulkanisateigenschaften

| | VT10 | T11 | T12 |
|---|---|---|---|
| DVR 22h/150'C (%) | 21 | 19 | 13 |
| DVR 24h/175'C (%) | 44 | 30 | 25 |
| Zugfestigkeit (MPa) | 15,8 | 11,9 | 13,5 |
| Reißdehnung (%) | 155 | 316 | 164 |
| M 100 (MPa) | 11,0 | 7,0 | 10,8 |
| Härte (Shore A) | 77 | 75 | 78 |
| Weiterreißwiderstand DIN 53515 (N/mm) | 12 | 20 | 13 |
| Vulkanisateigenschaften nach Heißluftalterung (168 Stunden bei 150'C) | | | |
| Zugfestigkeit (MPa) | 15 | 16,1 | 18,7 |
| Reißdehnung (%) | 165 | 160 | 114 |

(fortgesetzt)

| Vulkanisateigenschaften nach Heißluftalterung (168 Stunden bei 150'C) | | | |
|---|---|---|---|
| M 100 (MPa) | 12,1 | 11,4 | 16,9 |
| Härte (Shore A) | 89 | 87 | 85 |
| Vulkanisateigenschaften nach Lagerung in Öl IRM 903 (168 Stunden bei 150'C) | | | |
| Zugfestigkeit (MPa) | 13,3 | 12,3 | 12,8 |
| Reißdehnung (%) | 148 | 214 | 147 |
| M 100 (MPa) | 9 | 6,4 | 9,8 |
| Härte (Shore A) | 54 | 51 | 62 |

Die dynamischen Reißeigenschaften wurden zudem im Tear Analyzer untersucht. Die Ergebnisse sind in Fig. 3 und Fig. 4 wiedergegeben. Dabei zeigte sich, dass die Rissbildungsrate der erfindungsgemäßen Vulkanisate deutlich geringer und damit die Lebensdauer der aus solchen Vulkanisaten bestehenden dynamisch belasteten Formkörper deutlich höher ist gegenüber peroxidisch vulkanisierten Ethylen-Vinylacetat-Copolymerisaten. Weit größer sind die Vorteile der erfindungsgemäßen Vulkanisate gegenüber solchen, die durch Polycarbonsäurevernetzung von nicht erfindungsgemäßer epoxyhaltiger Ethylen-Vinylacetat-Copolymerisate erhalten wurden. Dabei zeigten Vulkanisate der vulkanisierbaren Mischungen enthaltend Glutarsäure und die Copolymerisate VT2 bzw. VT6 Rissbildungsraten und Lebensdauern die noch weit schlechter waren als die des peroxidisch vernetzten Vulkanisats auf Basis von Levapren 600.

**3. 2D-Chromatoaraphie**

Es wurden Zusammensetzungen enthaltend Copolymere mit ähnlichem GMA-Gehalt analysiert wobei unterschieden wurde zwischen Zusammensetzungen enthaltend Copolymere, bei denen während der Polymerisation GMA zugegeben wurde und Zusammensetzungen enthaltend Copolymere bei denen alles GMA zu Beginn der Polymerisation zugegeben wurde.

Die Analyse erfolgte mittels einer HPLC/GPC-Kopplung durchgeführt (2D-Chromatographie) welche von der Fa. PSS Polymer Standards Service GmbH, In der Dalheimer Wiese 5, D-55120 Mainz, Germany, kommerziell vertrieben wird.

Für die 2D-Chromatographie wurden folgende Parameter gewählt:

1. Proben

| | |
|---|---|
| Lösemittel: | THF/$CHCl_3$ 50/50 v/v |
| Konzentration: | 20 g/L |
| Filtration: | über einen Einmalfilter mit einer Porengröße von 0,45 μm |
| Injektionsvolumen: | 20 μL |

2. HPLC-Dimension

| | |
|---|---|
| Trennsäule: | Edelstahlsäule - 50 mm/ 8,0 mm ID, PSS ANIT, 10μm |
| Säulentemperatur: | 30°C |
| Elutionsmittel: | CH und THF |
| Flussgeschwindigkeit: | 0,2 mL/min |
| Gradient: | von CH/THF 70/30 zu CH/THF 21/79 in 210 Minuten |

3. GPC-Dimension

| | |
|---|---|
| Trennsäule: | Edelstahlsäule - 50 mm/ 20,0 mm ID, PSS SDV, 10μm |
| Säulentemperatur: | RT |
| Elutionsmittel: | THF |
| Flussrate: | 5 ml/min |
| Detektor: | ELSD, NT 90°C, ET 100°C, GF 1,5 SLM |

4. Schaltventil

| | |
|---|---|
| Schleifenvolumen: | 200 $\mu$L |
| Laufzeit/Injekt: | 2 min |
| Transferinjektionen: | 106 |

5. Unter den gewählten Bedingungen werden nur 50% des HPLC-Eluats aus der ersten Dimension in die zweite Dimension überführt.
6. GPC-Auswertung der löslichen Probenanteile bezogen auf Polystyroläquivalente.
7. Abkürzungen

| | |
|---|---|
| ANIT | Acrylnitrilpolymer |
| CH | Cyclohexan |
| ELSD | Evaporative Light Scattering Detector |
| ET | Evaporator Temperatur |
| GF | Gas Flow |
| GPC | Gelpermeationschromatographie |
| HPLC | High Performance Liquid Chromatographie |
| ID | Innendurchmesser |
| NT | Nebulizer Temperatur |
| PSS | Polymer Standard Service |
| RT | Raumtemperatur |
| SDV | Styrol-Divinylbenzol |
| SLM | Standard-Liter pro Minute |
| THF | Tetrahydrofuran |

Dabei zeigte sich, dass Copolymere bei denen alles GMA zu Beginn der Polymerisation zugegeben wurde im Chromatogramm mindestens zwei Polymerfraktionen zeigen (vgl. Fig. 2), wohingegen Copolymere bei denen GMA nach Beginn der Polymerisation zugegeben wurde im Chromatogramm hingegen im Wesentlichen nur eine Polymerfraktionzeigen (vgl. Fig. 1).

## Patentansprüche

1. Epoxygruppenhaltiges Copolymer mit einem Gehalt an einpolymerisiertem Vinylacetat von mindestens 35 Gew.-%, einem Gehalt an einpolymerisiertem Ethylen von mindestens 10 Gew.-% und einem Gehalt an einpolymerisierten epoxygruppenhaltigen Monomeren von 0,1 bis 6,2 Gew.-%, jeweils bezogen auf das epoxygruppenhaltige Copolymer, **dadurch gekennzeichnet, dass** eine Mischung des epoxygruppenhaltigen Copolymers mit der halben molaren Menge an Glutarsäure bezogen auf die im epoxygruppenhaltigen Copolymer enthaltenen Epoxygruppen und der 3,5-fachen molaren Menge Tetrabutylammoniumbromid bezogen auf die im epoxygruppenhaltigen Copolymer enthaltenen Epoxygruppen, nach 12 minütiger Vulkanisation bei 180 °C einen Gelgehalt von mindestens 50 Gew.-%, vorzugsweise mindestens 80 Gew.-%, besonders bevorzugt mindestens 85 Gew.-% und ganz besonders bevorzugt von 90 bis 100 Gew.-% aufweist.

2. Epoxygruppenhaltiges Copolymer gemäß Anspruch 1, **dadurch gekennzeichnet, dass** der Gehalt an einpolymerisiertem Vinylacetat mindestens 40 Gew.-%, vorzugsweise mindestens 45 Gew.-%, besonders bevorzugt mindestens 50 Gew.-% beträgt, jeweils bezogen auf das epoxygruppenhaltige Copolymer.

3. Epoxygruppenhaltiges Copolymer gemäß Anspruch 1 oder 2, **dadurch gekennzeichnet, dass** der Gehalt an einpolymerisiertem Ethylen mindestens 15 Gew.-%, vorzugsweise 20 Gew.-% und besonders bevorzugt mindestens 25 Gew.-% beträgt, jeweils bezogen auf das epoxygruppenhaltige Copolymer.

4. Epoxygruppenhaltiges Copolymer nach einem der Ansprüche 1 bis 3, **dadurch gekennzeichnet, dass** der Gehalt an einpolymerisierten epoxygruppenhaltigen Monomeren von 0,1 bis 5,8 Gew.-%, bevorzugt von 0,5 bis 5,0 Gew.-%, besonders bevorzugt von 0,8 bis 4,5 Gew.-% beträgt, jeweils bezogen auf das epoxygruppenhaltige Copolymer.

5. Epoxygruppenhaltiges Copolymer nach einem der Ansprüche 1 bis 4, **dadurch gekennzeichnet, dass** das einpolymerisierte epoxygruppenhaltige Monomer ausgewählt ist aus der Gruppe bestehend aus 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethylmethacrylat, (6',7'-Epoxyheptyl)-acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinyl-benzyl-glycidylether, m-Vinylbenzylglycidylether, p-Vinylbenzylglycidylether, 3-Vinylcyclohexenoxid und Mischungen davon, vorzugsweise aus der Gruppe bestehend aus Glycidylmethacrylat, Glycidylmethylacrylat, Glycidylmethylmethacrylat, Glycidylacrylat, und Mischungen davon und besonders bevorzugt aus der Gruppe bestehend aus Glycidylacrylat, Glycidylmethacrylat und Mischungen davon.

6. Verfahren zur Herstellung von epoxygruppenhaltigen Copolymeren gemäß einem der Ansprüche 1 bis 5, **dadurch gekennzeichnet, dass** nach dem Start der Polymerisationsreaktion von mindestens Ethylen und Vinylacetat epoxygruppenhaltiges Monomer zur Reaktionsmischung zugegeben wird.

7. Verfahren gemäß Anspruch 6, **dadurch gekennzeichnet**, das die Reaktion in einer Reaktorkaskade durchgeführt wird, wobei die Zugabe des epoxygruppenhaltigen Monomers zur Reaktionsmischung in mindestens einem Reaktor erfolgt, welcher dem Reaktor nachgeschaltet ist, in dem die Polymerisationsreaktion gestartet wird, oder die Reaktion in einem Rohreaktor durchgeführt wird, wobei die Zugabe des epoxygruppenhaltigen Monomers zur Reaktionsmischung an mindestens einer Stelle erfolgt, die stromabwärts liegt von der Stelle, an der die Polymerisationsreaktion gestartet wird.

8. Verfahren gemäß Anspruch 6 oder 7, **dadurch gekennzeichnet, dass** die Reaktionsmischung beim Start der Polymerisation bereits epoxygruppenhaltiges Monomer enthält, bevorzugt in einer Menge von bis zu 50 Gew.-%, weiter bevorzugt bis zu 33 Gew.-%, besonders bevorzugt bis zu 25 Gew.-%, ganz besonders bevorzugt bis zu 10 Gew.-%, und meist bevorzugt im Bereich von 1 bis 5 Gew.-%, bezogen auf die Gesamtmenge an während der Polymerisation zugegebenem epoxygruppenhaltigen Monomer.

9. Verfahren gemäß einem der Ansprüche 6 bis 8, **dadurch gekennzeichnet, dass** das nach dem Start der Polymerisationsreaktion zugegebene epoxygruppenhaltige Monomer über einen Zeitraum von 0,1 bis 12 h, vorzugsweise 0,5 bis 10 h, besonders bevorzugt von 1 bis 8 h zur Reaktionsmischung zugegeben wird und/oder im Falle einer Reaktorkaskade die Zugabe in mindestens einem Reaktor erfolgt, welcher dem Reaktor nachgeschaltet ist, in dem die Polymerisationsreaktion gestartet wird.

10. Verwendung von epoxygruppenhaltigen Copolymeren nach einem der Ansprüche 1 bis 5 zur Herstellung von vulkanisierbaren Zusammensetzungen.

11. Vulkanisierbare Zusammensetzungen enthaltend mindestens ein epoxygruppenhaltiges Copolymer nach einem der Ansprüche 1 bis 5, ein Vernetzungshilfsmittel und mindestens einen niedermolekularen Vernetzer.

12. Vulkanisierbare Zusammensetzungen gemäß Anspruch 11, **dadurch gekennzeichnet, dass** es sich beim niedermolekularen Vernetzer um eine Polycarbonsäure, einen Polycarbonsäureester, ein Polycarbonsäureanhydrid oder eine Mischung davon, bevorzugt um eine aromatische oder aliphatische Di-,Tri- oder Tetracarbonsäure, besonders bevorzugt um aliphatische Di-,Tri- oder Tetracarbonsäure, ganz besonders bevorzugt um eine aliphatische Dicarbonsäure und meist bevorzugt um Glutarsäure, Dodecandisäure oder Adipinsäure handelt.

13. Vulkanisierbare Zusammensetzungen gemäß Anspruch 11 oder 12, **dadurch gekennzeichnet, dass** als Vernetzungshilfsmittel eine oder mehrere Verbindungen ausgewählt aus Tetraethylammoniumbromid, Tetrabutylammoniumchlorid, Tetrabutylammoniumbromid, Tetrabutylammoniumjodid, n-Dodecyltrimethylammoniumbromid, Cetyldi-methylbenzylammoniumchlorid, Methylcetyldibenzylammoniumbromid, Cetyldi-methylethylammoniumbromid, Cetyltrimethylammoniumbromid, Octadecyltrimethyl-ammoniumbromid, Cetylpyridiumchlorid, Cetylpyridiumbromid, 1,8-Diaza-bicyclo[5.4.0]undecen-7-methylammoniummethosulfat, 1,8-Diaza-bicyclo[5.4.0]un-decen-7-benzylammoniumchlorid, Cetyltrimethylammonium-alkylphenoxypoly-(ethylenoxy)-ethylphosphat, Cetylpyridiumsulfat, Tetraethylammoniumacetat, Trimethylbenzylammoniumbenzoat, Trimethylbenzylammonium-p-toluolsulfonat und Trimethylbenzylammoniumborat, Triphenylbenzylphosphoniumchlorid, Triphenylbenzylphosphoniumbromid, Triphenylbenzylphosphoniumjodid, Triphenylmethoxymethylphosphoniumchlorid, Triethylbenzylphosphoniumchlorid, Tricyclohexylbenzylphosphoniumchlorid, Trioctylmethylphosphoniumdimethylphosphat, Tetrabutylphosphoniumbromid und Trioctylmethylphosphoniumacetat, vorzugsweise Tributylammoniumbromid und/oder Hexadecyltrimethylammoniumbromid eingesetzt werden.

**14.** Verfahren zur Vulkanisation von epoxygruppenhaltigen Copolymeren gemäß einem der Ansprüche 1 bis 5 oder vulkanisierbaren Zusammensetzungen gemäß einem der Ansprüche 11 bis 13 **dadurch gekennzeichnet, dass** das epoxygruppenhaltige Copolymer oder die vulkanisierbare Zusammensetzung bei einer Temperatur im Bereich von 100 bis 250°C, vorzugsweise 140 bis 220 °C, besonders bevorzugt von 160 bis 200 °C vernetzt wird.

**15.** Vulkanisate erhältlich durch Vulkanisation von epoxygruppenhaltigen Copolymeren gemäß einem der Ansprüche 1 bis 5 oder vulkanisierbaren Zusammensetzungen gemäß einem der Ansprüche 11 bis 13 oder durch das Verfahren gemäß Anspruch 14.

**16.** Vulkanisate gemäß Anspruch 15, **dadurch gekennzeichnet, dass** sie eine Bruchdehnung bei RT von mindesten 150 %, bevorzugt mindestens 160 %, besonders bevorzugt mindestens 170 % und besonders bevorzugt mindestens 180 % aufweisen.

**17.** Vulkanisate gemäß Anspruch 15 oder 16, **dadurch gekennzeichnet, dass** sie einen Druckverformungsrest nach DIN ISO 815 168h/150 °C von maximal 60 %, vorzugsweise maximal 50 % und besonders bevorzugt maximal 40 % aufweisen.

**18.** Ungeschäumte und/oder geschäumte Formkörper, vorzugsweise Dichtungen, Isolierungen, Kabelmäntel, Kabelleitlagen, Schläuche oder Schalldämmaterialien enthaltend Vulkanisate gemäß einem der Ansprüche 15 bis 17.

**Fig. 1:** Ethylen-Vinylacetat-Glycidylmethacrylat-Copolymer bei welchem GMA auch nach Beginn der Polymerisation zugegeben wurde.

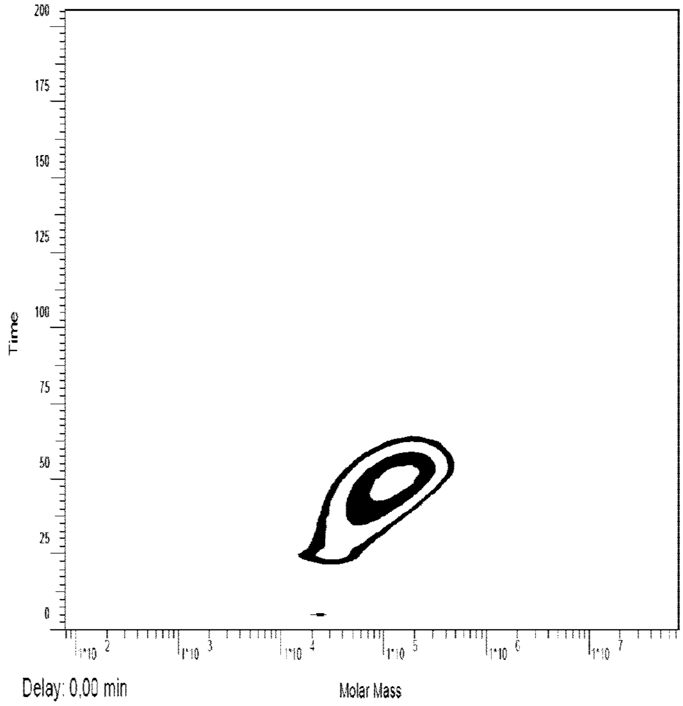


**Fig. 2:** Ethylen-Vinylacetat-Glycidylmethacrylat-Copolymer bei welchem GMA nur zu Beginn der Polymerisation zugegeben wurde

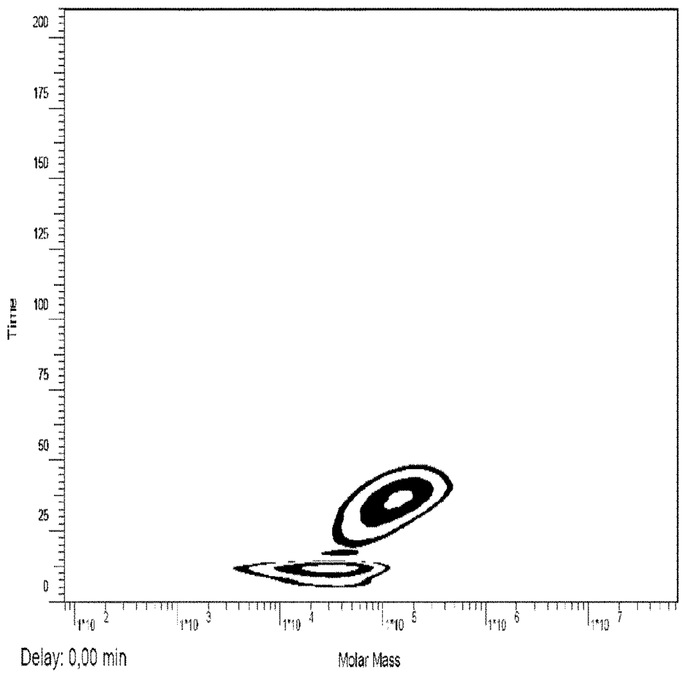

**Fig. 3:** Dynamische Reißeigenschaften: Risswachstum

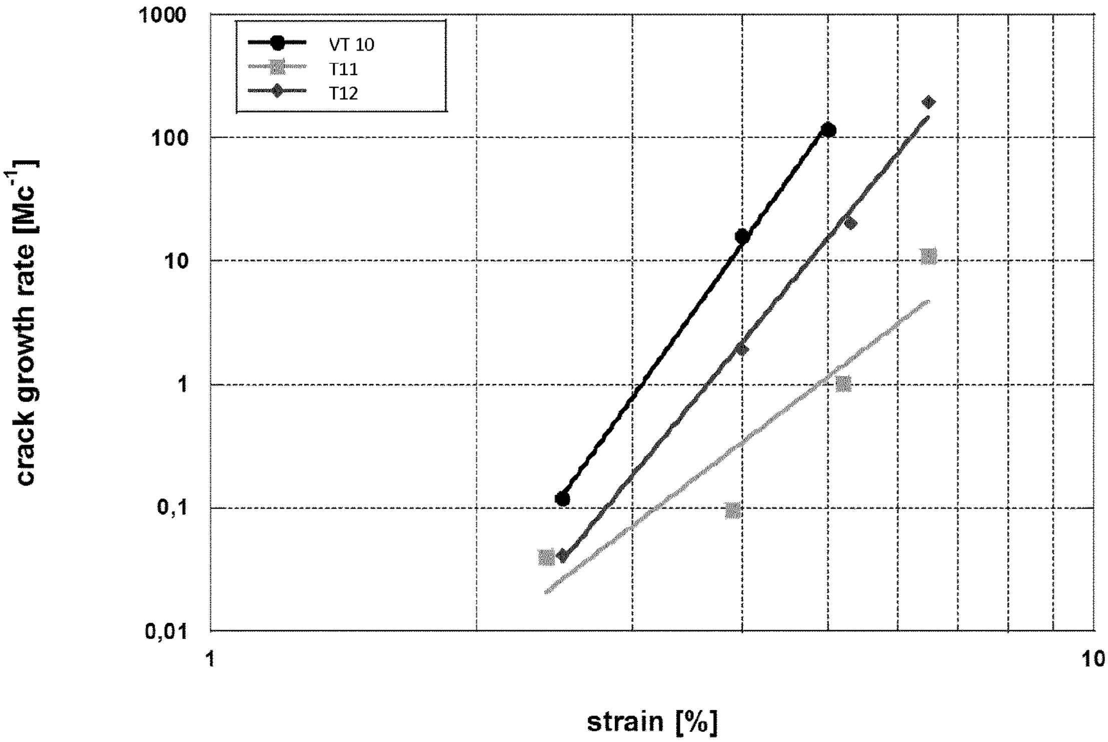


**Fig. 4:** Dynamische Reißeigenschaften: Lebensdauer

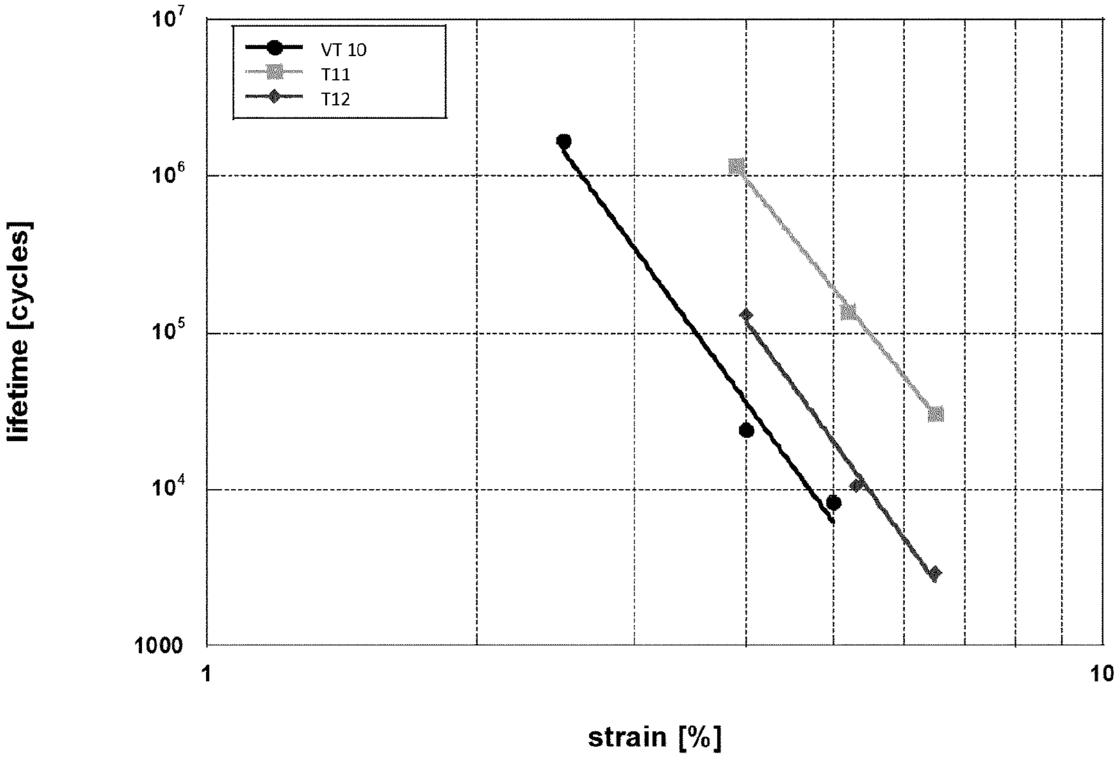

Europäisches Patentamt
European Patent Office
Office européen des brevets

# EUROPÄISCHER RECHERCHENBERICHT

Nummer der Anmeldung
EP 14 19 1162

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 303 560 A (TAKAHASHI KOHKI ET AL) 1. Dezember 1981 (1981-12-01)<br>* Beispiele 22,23,25, 28; Tabellen 9-11 *<br>* Ansprüche 1-3 * | 1-6, 9-11, 14-18 | INV.<br>C08F246/00<br>C08F218/08<br>C08F210/02<br>C08F2/00<br>C08K5/00<br>C08L23/08<br>C08L31/04<br><br>ADD.<br>C08F220/32<br>C08F2/06<br>C08K5/092<br>C08K5/19 |
| X | US 3 875 255 A (KATO YASUYUKI ET AL) 1. April 1975 (1975-04-01)<br>* Beispiel 3 * | 1-3,5 | |
| X,D | DE 35 25 695 A1 (NIPPON ZEON CO [JP]; TOYODA GOSEI KK [JP]) 30. Januar 1986 (1986-01-30)<br>* Ansprüche; Beispiel 4 * | 1,3-5, 10-18 | |
| X,D | EP 0 374 666 B1 (BAYER AG [DE]) 26. Januar 1994 (1994-01-26)<br>* Ansprüche 1,5,7,8; Beispiel 7 *<br>* Seite 5, Zeilen 48-51 *<br>* Seite 5, Zeile 57 - Seite 6, Zeile 10 * | 1-10, 14-18 | RECHERCHIERTE SACHGEBIETE (IPC)<br>C08F<br>C08L<br>C08K<br>C08J |
| X,D | EP 2 565 229 A1 (LANXESS DEUTSCHLAND GMBH [DE]) 6. März 2013 (2013-03-06)<br>* Ansprüche 1-4,10-13; Beispiele *<br>* Absätze [0021] - [0029] * | 1-10, 14-18 | |

Der vorliegende Recherchenbericht wurde für alle Patentansprüche erstellt

3

| Recherchenort | Abschlußdatum der Recherche | Prüfer |
|---|---|---|
| München | 30. April 2015 | Hollender, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 14 19 1162

In diesem Anhang sind die Mitglieder der Patentfamilien der im obengenannten europäischen Recherchenbericht angeführten Patentdokumente angegeben. Die Angaben über die Familienmitglieder entsprechen dem Stand der Datei des Europäischen Patentamts am Diese Angaben dienen nur zur Unterrichtung und erfolgen ohne Gewähr.

30-04-2015

| Im Recherchenbericht angeführtes Patentdokument | Datum der Veröffentlichung | Mitglied(er) der Patentfamilie | Datum der Veröffentlichung |
|---|---|---|---|
| US 4303560 A | 01-12-1981 | DE 2949341 A1 | 25-09-1980 |
| | | DE 2954636 C2 | 24-01-1991 |
| | | FR 2451929 A1 | 17-10-1980 |
| | | FR 2451930 A1 | 17-10-1980 |
| | | IT 1126542 B | 21-05-1986 |
| | | US 4303560 A | 01-12-1981 |
| | | US 4517348 A | 14-05-1985 |
| US 3875255 A | 01-04-1975 | DE 2313848 A1 | 11-10-1973 |
| | | FR 2176924 A1 | 02-11-1973 |
| | | GB 1415222 A | 26-11-1975 |
| | | IT 980435 B | 30-09-1974 |
| | | JP S4894791 A | 06-12-1973 |
| | | JP S4948348 B2 | 20-12-1974 |
| | | NL 7303978 A | 25-09-1973 |
| | | US 3875255 A | 01-04-1975 |
| DE 3525695 A1 | 30-01-1986 | DE 3525695 A1 | 30-01-1986 |
| | | FR 2567899 A1 | 24-01-1986 |
| | | JP H0368052 B2 | 25-10-1991 |
| | | JP S6126620 A | 05-02-1986 |
| | | US 4650834 A | 17-03-1987 |
| EP 0374666 B1 | 26-01-1994 | CA 2006391 A1 | 23-06-1990 |
| | | EP 0374666 A2 | 27-06-1990 |
| | | JP H02222405 A | 05-09-1990 |
| | | US 5298577 A | 29-03-1994 |
| EP 2565229 A1 | 06-03-2013 | CN 103814075 A | 21-05-2014 |
| | | EP 2565229 A1 | 06-03-2013 |
| | | EP 2751188 A1 | 09-07-2014 |
| | | JP 2014527567 A | 16-10-2014 |
| | | WO 2013030352 A1 | 07-03-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0374666 B1
- EP 2565229 A1
- DE 3525695
- US 4826721 A


### In der Beschreibung aufgeführte Nicht-Patentliteratur


- **BERGMANN, G. ; KELBCH, S. ; FISCHER, C. ; MAGG, .H ; WRANA, C.** *Gummi, Fasern, Kunststoffe,* 2008, vol. 61 (8), 490-497
- Chemicals and Additives. Ullmann's Encyclopedia of Industrial Chemistry. VCH Verlagsgesellschaft mbH, 1993, vol. A 23, 366-417